# EUROPÄISCHE PATENTSCHRIFT

(11) **EP 4 122 058 B1**
(45) Veröffentlichungstag und Bekanntmachung des Hinweises auf die Patenterteilung: **07.02.2024**
(21) Anmeldenummer: 21713610.0
(22) Anmeldetag: 17.03.2021
(51) Int. Cl.: H01R 25/16, F21V 21/005, H02G 3/06

(54) **LICHTBAND MIT VERBUNDENEN LEUCHTENELEMENTEN**
LIGHT STRIP HAVING CONNECTED ILLUMINATING ELEMENTS
BANDE LUMINEUSE À ÉLÉMENTS D'ÉCLAIRAGE CONNECTÉS

(30) Priorität: 17.03.2020 DE 102020107312
(43) Veröffentlichungstag der Anmeldung: 25.01.2023
(73) Patentinhaber: Trilux GmbH & Co. KG, 59759 Arnsberg (DE)
(72) Erfinder: DREES, Frank, 58840 Plettenberg (DE); MARQUAS, Karsten, 59757 Arnsberg (DE); BAYER, Markus, 96135 Stegaurach (DE)
(74) Vertreter: Lippert Stachow Patentanwälte Rechtsanwälte
(86) Internationale Anmeldenummer: PCT/EP2021/056777
(87) Internationale Veröffentlichungsnummer: WO 2021/185888

(56) Entgegenhaltungen:
- WO-A1-01/91250
- DE-A1-102010 032 383
- DE-A1-102018 106 235
- DE-B4-102010 032 383

## Beschreibung

Die Erfindung betrifft ein System mit einer Leuchte gemäß dem Oberbegriff von Anspruch 1 sowie Bestandteile des Systems und ein Verfahren zur Herstellung einer Leuchtenanordnung.

Gattungsgemäße Systeme betreffen eine Leuchte, die in einer Längsrichtung langgestreckt ist und die eine in Längsrichtung langgestreckte Tragschiene und einen in Längsrichtung langgestreckten Montagekörper aufweist. Typischerweise dient die Tragschiene zur Fixierung der Leuchte an einem Baukörper, beispielsweise einer Decke. An dem Montagekörper sind üblicherweise elektrische Funktionselemente der Leuchte befestigt, beispielsweise Platinen mit LEDs, Funkmodule, elektrische Leitungen und/oder Betriebsgeräte. Bei der Montage einer Leuchte wird üblicherweise zunächst die Tragschiene an dem Baukörper befestigt und anschließend der Montagekörper, der mit den genannten elektrischen Funktionselementen der Leuchte bestückt ist, an der Tragschiene fixiert, so dass Tragschiene und Montagekörper einen Innenraum ausbilden, in dem wesentliche Elemente der Leuchte angeordnet sind, beispielsweise Platinen, Betriebsgeräte, etc. Typischerweise sind Tragschiene und Montagekörper jeweils in einer Längsrichtung langgestreckt ausgebildet, bevorzugt beträgt die Längserstreckung dabei zumindest das 5-Fache der Erstreckungen senkrecht zur Längsrichtung. Die Tragschiene weist gattungsgemäß einen Querschnitt senkrecht zur Längsrichtung auf, der entlang einer Vertikalrichtung an einem vertikalen Ende offen ist und entlang einer Querrichtung durch zwei Tragschienenseitenwände begrenzt ist, die durch einen entlang der Querrichtung verlaufenden Tragschienenboden miteinander verbunden sind und die sich von dem Tragschienenboden vertikal weg erstrecken. Üblicherweise wird die Tragschiene über ihren Tragschienenboden an einem Bauelement befestigt. Der Montagekörper wird gattungsgemäß an dem offenen vertikalen Ende der Tragschiene angeordnet, so dass der Montagekörper gemeinsam mit der Tragschiene einen Innenraum ausbildet, der durch Tragschiene und Montagekörper senkrecht zur Längsrichtung umlaufend umschlossen ist. Zumindest in einigen Längsabschnitten kann die Umschließung des Innenraums, die durch Tragschiene und Montagekörper gebildet ist, abschnittsweise unterbrochen sein, beispielsweise um Zugang zu dem Innenraum zu ermöglichen, beispielsweise zur Luftzufuhr. Bevorzugt ist der Innenraum über mindestens 80%, insbesondere mindestens 90 % seiner Längserstreckung, insbesondere über seine Längserstreckung hinweg ununterbrochen durchgängig umschlossen. Der Montagekörper weist oftmals einen Querschnitt senkrecht zur Längsrichtung auf, der einen sich in Querrichtung erstreckenden Montagekörperboden und an den beiden Querseiten des Montagekörperbodens sich von dem Montagekörperboden vertikal weg erstreckende Montagekörperseitenwände umfasst. Bevorzugt ist in einer Betriebsposition der Montagekörperboden an dem offenen Ende der Tragschiene angeordnet. Tragschiene und Montagekörper sind im Allgemeinen üblicherweise getrennt voneinander hergestellt. Besonders bevorzugt sind Tragschiene und/oder Montagekörper jeweils aus einem Blech durch Umformen hergestellt. Üblicherweise ist der Montagekörper in einem Betriebszustand der Leuchte, in dem die Leuchte bestimmungsgemäß verwendet wird, über eine Haltefeder an der Tragschiene gehalten. Im Stand der Technik sind verschiedenste Möglichkeiten zur Realisierung einer solchen Haltefeder bekannt. Üblicherweise ist die Haltefeder fest mit dem Montagekörper verbunden und weist in Transversalrichtung elastisch auslenkbare Haltevorsprünge auf. Bei einer Montage des Montagekörpers an der Tragschiene wird der Montagekörper üblicherweise entlang der Vertikalen auf die Tragschiene, d. h. auf deren offenes Ende, zubewegt, bis der Montagekörper an der Tragschiene anliegt, wobei während dieser Bewegung die Haltevorsprünge der Haltefeder zur Quermitte des Montagekörpers hin ausgelenkt werden, um an an der Innenseite der Tragschienenseitenwände vorgesehenen Tragschienenhalteankern vorbeigeführt werden zu können, wobei sie nach dem Vorbeiführen an den Tragschienenhalteankern elastisch in Querrichtung nach außen geführt werden und mit den Tragschienenhalteankern einen Formschluss bilden, insbesondere hinter diese Tragschienenhalteanker einrasten, so dass die Haltefeder den Montagekörper an der dem Tragschienenboden abgewandten, offenen Seite der Tragschiene an der Tragschiene fixiert, so dass der Montagekörper, der Tragschienenboden und die Tragschienenseitenwände den Innenraum der Leuchte umschließen. Bevorzugt sind die Tragschienenhalteanker als Vorsprünge ausgebildet.

Üblicherweise weist eine Leuchte eines gattungsgemäßen Systems ferner eine Stromleitschiene auf, die zumeist aus Kunststoff hergestellt ist, insbesondere mittels Extrusionsverfahren, und die ebenfalls in Längsrichtung langgestreckt ist. Die Stromleitschiene ist üblicherweise an einer zum Innenraum gewandten Innenseite der Tragschiene angeordnet und an der Tragschiene fixiert, insbesondere an dem Tragschienenboden und/oder an zumindest einer der Tragschienenseitenwände. Die Stromleitschiene erstreckt sich über einen wesentlichen Anteil der Länge der Tragschiene hinweg, insbesondere über mindestens 80 % der Längserstreckung der Tragschiene hinweg. Üblicherweise weist die Stromleitschiene mehrere entlang einer Transversalrichtung nebeneinander angeordnete Kanäle auf, die zu einer Zugangsseite hin offen sind, die vom Innenraum aus zugänglich ist. Die Transversalrichtung verläuft senkrecht zur Längsrichtung, insbesondere senkrecht zur Vertikalrichtung, entspricht insbesondere der Querrichtung, wenn die Stromleitschiene an dem Tragschienenboden angeordnet ist, und die Kanäle erstrecken sich über die gesamte Länge der Stromleitschiene. In der Leuchte ist in zumindest einigen der Kanäle jeweils ein Leitungsdraht angeordnet, und an zumindest einem Längsende der Stromleitschiene sind die Leitungsdrähte üblicherweise mit einer externen Spannungsquelle verbunden, über die elektrische Energie und insbesondere elektrische Signale auf die Leitungsdrähte aufgebracht werden können. Hierzu ist üblicherweise an dem Längsende ein insbesondere als eine elektrische Einspeiseeinrichtung ausgebildeter elektrischer Verbinder angeordnet, der elektrisch mit den Leitungsdrähten verbunden ist. Zumeist ist an jedem Längsende der Stromleitschiene jeweils ein elektrischer Verbinder vorgesehen. Die elektrischen Verbinder können beispielsweise als zueinander korrespondierende Verbinder ausgebildet sein, beispielsweise ein erster als Stecker und ein zweiter als Buchse. Bei dem Vorsehen von zumindest einem Verbinder an zumindest einem Längsende der Stromleitschiene können in Längsrichtung benachbarte Stromleitschienen miteinander elektrisch verbunden sein, so dass die Leitungsdrähte eine Durchgangsverdrahtung bilden können.

Gattungsgemäße Systeme werden in einem breiten Anwendungsbereich eingesetzt, beispielsweise in Lagerhallen, Produktionshallen, Supermärkten oder Großraumbüros, wobei Leuchten mit einer Mehrzahl an Tragschienen und Montagekörpern zum Einsatz kommen. Das Grundprinzip der Leuchten gattungsgemäßer Systeme besteht darin, dass die Tragschienen die elektrische und mechanische Infrastruktur dieser Leuchten bilden, wohingegen die Montagekörper an den Tragschienen befestigt werden und die elektrischen Funktionselemente aufweisen, die in dem jeweiligen Anwendungsbereich benötigt werden. Selbstverständlich sind üblicherweise zumindest einige der elektrischen Funktionselemente als Leuchtmodule mit Leuchtmitteln ausgebildet, insbesondere umfassend LED-Platinen, beispielsweise können alternativ oder zusätzlich auch weitere elektrische Funktionselemente an dem jeweiligen Montagekörper vorgesehen sein, wie beispielsweise ein Anwesenheitssensor (beispielsweise Infrarotsensor), eine Kamera, ein Funkmodul, etc. Die elektrischen Funktionselemente sind üblicherweise an dem Montagekörper fixiert.

Die Leuchte weist üblicherweise eine Kontakteinrichtung auf, über die ein elektrischer Kontakt zwischen den Leitungsdrähten der Stromleitschiene der Tragschiene und dem zumindest einen elektrischen Funktionsmodul des Montagekörpers hergestellt wird. Im Stand der Technik sind eine Vielzahl solcher Kontakteinrichtungen bekannt. Üblicherweise sind solche Kontakteinrichtungen an dem Montagekörper fixiert und weisen elektrische Kontakte auf, die in die Kanäle der Stromleitschiene eingeführt werden, während der Montagekörper entlang der Vertikalen auf die Tragschiene zu bewegt wird, bis er an dem offenen Ende der Tragschiene anliegt. In diesem bestimmungsgemäßen Betriebszustand sind die Kontakte in elektrisch leitender Verbindung mit zumindest einigen der Leitungsdrähte, wobei die Kontakteinrichtung eine elektrisch leitende Verbindung zwischen den Kontakten und dem zumindest einen elektrischen Funktionsmodul herstellt, so dass das elektrische Funktionselement über die Kontakte mit den entsprechenden Leitungsdrähten der Stromleitschiene verbunden ist. Über diese elektrische Verbindung ist üblicherweise das elektrische Funktionselement mit elektrischer Energie versorgt, und das elektrische Funktionselement kann auch über weitere der Leitungsdrähte mit externen elektrischen Komponenten verbunden sein, beispielsweise mit einer Notstromversorgung und/oder mit einem Steuergerät, über das das elektrische Funktionsmodul Steuersignale empfangen kann. Hierbei ist üblicherweise in der Stromleitschiene eine Steuerleitung durch zwei der Leitungsdrähte ausgebildet, über die die Steuersignale zu dem zumindest einen elektrischen Funktionselement übertragen werden können. Üblicherweise handelt es sich bei Leuchten gattungsgemäßer Systeme dabei um Steuerleitungen, über die Steuerbefehle gemäß dem DALI-Standard übermittelt werden.

In typischen Anwendungsfällen werden gattungsgemäße Systeme so verwendet, dass mehrere Leuchtenbauteile, von denen jedes eine wie erläutert ausgebildete Tragschiene, einen wie erläutert ausgebildeten Montagekörper und eine wie erläutert ausgebildete Stromleitschiene umfasst, in Längsrichtung nebeneinander angeordnet werden, wobei die Tragschienen der jeweiligen Leuchtenbauteile miteinander mechanisch gekoppelt sind und die Stromleitschienen der Leuchtenbauteile miteinander elektrisch verbunden sind. Hierdurch können großflächig langgestreckte Leuchtenstrukturen geschaffen werden, wie dies in einer Vielzahl an Anwendungsfällen erforderlich ist. Die mechanische Kopplung erfolgt üblicherweise durch bekannte Kupplungen. Solche Kupplungen können beispielsweise als U-Profil ausgebildet sein, das in zwei nebeneinander angeordnete Tragschienen eingesetzt und darin befestigt wird, beispielsweise verklemmt oder verschraubt. Anstelle eines U-Profils können auch andere Profile, beispielsweise Verbindungsplatten, verwendet werden. Dabei umfasst somit eine Leuchte des jeweiligen Systems eine Vielzahl an Tragschienen, Montagekörpern und Stromleitschienen, die jeweils wie erläutert miteinander verbunden sind. Solche Leuchten sind per se mit externen Stromquellen und insbesondere Steuergeräten zu verbinden, so dass stets durch entsprechende elektrische Anschlüsse eine elektrische Verbindung der zumindest einen Stromleitschiene der Leuchte mit externen elektrischen Geräten vorhanden ist.

Als problematisch hat sich bei gattungsgemäßen Systemen bzw. daraus realisierten Leuchtenanordnungen und Leuchten die Verbindung von zwei benachbarten Stromleitschienen herausgestellt. Wie erläutert ist wegen des modularen Grundprinzips des Systems, wonach zur Realisierung solcher Leuchtenanordnungen und Leuchten Tragschienen in Längsrichtung hintereinander angeordnet und mechanisch miteinander verbunden werden und Stromleitschienen in Längsrichtung hintereinander angeordnet und elektrisch miteinander verbunden werden und mechanisch an den Tragschienen gehalten und somit über die Tragschienen miteinander verbunden werden, stets eine Verbindung von Stromleitschienen miteinander erforderlich. Auch müssen an bestimmten Stellen Einspeiseeinrichtungen vorgesehen sein, über die die Leitungsdrähte der Stromleitschienen an externe Leitungsnetze, beispielsweise Versorgungsnetze und Steuerleitungsnetze, angeschlossen werden können. Im Stand der Technik sind verschiedenste Möglichkeiten zur Realisierung solcher elektrischen Verbindungen von Stromleitschienen des Systems und von Einspeiseeinrichtungen zum Einspeisen in die Leitungsdrähte des Systems bekannt. So ist beispielsweise bekannt, Systeme mit Stromleitschienen mit vordefinierten Längen bereitzustellen, an deren Längsenden korrespondierende Steckeinrichtungen angeordnet sind, wobei je nach der zur Realisierung einer bestimmten Leuchtenanordnung bzw. Leuchte erforderlichen Länge eine Anzahl an Stromleitschienen miteinander verbunden werden, indem ihre Steckeinrichtungen ineinander gesteckt werden. Solche Steckeinrichtungen sind jedoch üblicherweise im montierten Zustand der Stromleitschienen an den Tragschienen nicht einfach ineinander zu stecken, und darüber hinaus nehmen solche Steckeinrichtungen einen nicht unerheblichen Platz entlang der Längsrichtung ein, innerhalb dessen dann eine Kontakteinrichtung des Systems nicht mit den Leitungsdrähten der Stromleitschienen kontaktiert werden kann, was die Variabilität der Einsatzmöglichkeit bekannter Systeme einschränkt. Außerdem ist zu berücksichtigen, dass an den Kontaktstellen der Steckeinrichtungen die erforderlichen Luft- und Kriechstrecken zwischen den verschiedenen Leitungsdrähten eingehalten werden müssen, was insbesondere insofern problematisch ist, als allgemein die Bestrebung besteht, möglichst viele Leitungsdrähte in einer Stromleitschiene mit möglichst geringer Erstreckung in Transversalrichtung zu realisieren, damit möglichst kleine und optische ansprechende Leuchten realisiert werden können, die gleichzeitig wegen der hohen Anzahl an enthaltenen Leitungsdrähten eine sehr gute Funktionalität aufweisen. Außerdem ist bei den im Stand der Technik bekannten Systemen problematisch, dass stets nur Stromleitschienen mit vordefinierten Längen verwendet werden können, an denen dann die Steckeinrichtungen vorgesehen sind. Eine Abstimmung einer konkreten Leuchtenlänge entlang der Längsrichtung auf konkrete Anwendungsgebiete, die eine Verwendung des durch die von dem System umfassten Stromleitschienen vorgegebenen Längenraster nicht abbildbar ist, erfordert stets eine komplizierte Anpassung und eigens für das jeweilige Anwendungsgebiet zugeschnittene Fertigung. Diesem Problem wird teilweise dadurch begegnet, dass Stromleitschienen miteinander verbunden werden, indem Verbindungseinrichtungen verwendet werden, die zwei Verbindungseinrichtungselemente aufweisen, die durch Leitungsdrähte miteinander verbunden sind, wobei die Verbindungseinrichtungselemente jeweils an der Zugangsseite einer Stromleitschiene in diese eingesetzt werden können zum Kontaktieren der Leitungsdrähte. Wegen der Verbindungsleitung zwischen den Verbindungseinrichtungselementen ist eine Variabilität der Längserstreckung einer solchen Verbindungseinrichtung gewährleistet, jedoch zu Lasten einer Kontaktierbarkeit der in den Stromleitschienen vorgesehenen Leitungsdrähte durch eine Kontakteinrichtung über die Erstreckung der Verbindungseinrichtung hinweg. Beispielsweise offenbart WO 01/91250 A1 ein System mit Tragschienen, Stromleitschienen, elektrischem Verbinder und Kontakteinrichtung, wobei die Kontakteinrichtung als Drehabgriff ausgebildet ist und nach dem Anordnen des Montagekörpers an der Tragschiene eine Kontaktierung der Leitungsdrähte der Stromleitschiene erreicht werden kann, indem der Drehabgriff gedreht wird. Ferner ist beispielsweise in DE 10 2010 032 383 A1 ein Stromleitschienensystem mit zwei Stromleitschienen und einem elektrischen Verbinder offenbart, wobei der elektrische Verbinder Kontaktabschnitte aufweist, mit denen er in Kanäle der Stromleitschienen steckbar ist, um die Leitungsdrähte der beiden Stromleitschienen miteinander zu verbinden. DE 10 2018 106 235 A1 offenbart ferner ein System mit einer Stromleitschiene, die langgestreckte Stromleitschienenabschnitte und zwischen den Stromleitschienenabschnitten angeordnete Zwischenelemente aufweist.

Der vorliegenden Erfindung liegt die Aufgabe zugrunde, ein System, eine Stromleitschiene und/oder ein Verfahren zur Realisierung einer Leuchtenanordnung bereitzustellen, mit dem zumindest eines der Probleme gattungsgemäßer Systeme, Stromleitschienen und Verfahren zumindest teilweise behoben werden kann.

Als eine Lösung der vorgenannt beschriebenen, der Erfindung zugrundeliegenden Aufgabe schlägt die Erfindung ein System mit den Merkmalen von Anspruch 1 vor. Das System ist zur Realisierung einer in einer Längsrichtung langgestreckten Leuchte geeignet und zur Realisierung einer in einer Längsrichtung langgestreckten Leuchtenanordnung geeignet, wobei eine Leuchtenanordnung eine Anordnung von mehreren Leuchtenelementen ist, die auf bestimmte Weise zueinander angeordnet sind. Das System umfasst mehrere in Längsrichtung langgestreckte Tragschienen, mehrere in Längsrichtung langgestreckte Stromleitschienen und mehrere in Längsrichtung verlaufende Leitungsdrähte. Jede der Stromleitschienen weist jeweils eine Mehrzahl an entlang der Längsrichtung verlaufenden, entlang einer Transversalrichtung nebeneinander angeordneten und an einer entlang einer Vertikalrichtung ausgebildeten Zugangsseite der jeweiligen Stromleitschiene offene Kanäle auf. Jeder der Stromleitschienen ist jeweils eine Gruppe der Leitungsdrähte zugeordnet. Jeder Leitungsdraht der Gruppe an Leitungsdrähten, die einer bestimmten der Stromleitschienen zugeordnet ist, ist in jeweils einem der Kanäle der Stromleitschienen angeordnet. Die Anordnung der Leitungsdrähte in den Kanälen dient dem Zweck, dass die Leitungsdrähte von der Zugangsseite der Stromleitschiene aus, an der die Kanäle offen sind, kontaktierbar sind, wobei sie durch das Anordnen in den Kanälen voneinander elektrisch isoliert sind. Das System ist dazu geeignet, dass die vorgenannt beschriebenen Komponenten des Systems in einer Betriebsposition zueinander angeordnet werden können. Die Betriebsposition bezeichnet somit eine definierte Position der vorgenannt beschriebenen und gegebenenfalls auch weiterer Bestandteile des Systems zueinander. In der Betriebsposition ist eine erste der Stromleitschienen, in deren Kanäle die Leitungsdrähte einer ersten Gruppe an Leitungsdrähten angeordnet sind, an einer ersten der Tragschienen fixiert unter Ausbildung eines ersten Leuchtenelements. In der Betriebsposition ist ferner eine zweite der Stromleitschienen, in deren Kanäle die Leitungsdrähte einer zweiten Gruppe an Leitungsdrähten angeordnet sind, an einer zweiten der Tragschienen fixiert unter Ausbildung eines zweiten Leuchtenelements. Erste und zweite Gruppe an Leitungsdrähten weisen keine Schnittmenge miteinander auf, sondern die Leitungsdrähte der ersten Gruppe an Leitungsdrähten sind andere Leitungsdrähte als die Leitungsdrähte der zweiten Gruppe an Leitungsdrähten. Erstes und zweites Leuchtenelement, definiert durch die vorgenannt beschriebene Anordnung von Stromleitschiene, Leitungsdrähten und Tragschiene des jeweiligen Leuchtenelements in der Betriebsposition, können grundsätzlich in verschiedenen Positionen des Systems, in denen Bestandteile des Systems unterschiedliche Relativpositionen zueinander einnehmen können, unabhängig voneinander bewegt werden. In der Betriebsposition ist die Relativposition der Leuchtenelementen zueinander definiert, nämlich dadurch, dass die Leuchtenelemente in Längsrichtung nebeneinander angeordnet sind und die Tragschienen mechanisch aneinander fixiert sind und jeweils einer der Leitungsdrähte der ersten mit jeweils einem der Leitungsdrähte der zweiten Gruppe an Leitungsdrähten miteinander elektrisch leitend verbunden sind. Das erfindungsgemäße System umfasst einen sich in Längsrichtung erstreckenden elektrischen Verbinder, der eine erste und zweite Gruppe an Anschlusseinrichtungen umfasst. Die erste Gruppe an Anschlusseinrichtungen ist von der zweiten Gruppe von Anschlusseinrichtungen in Längsrichtung beabstandet. Jede Anschlusseinrichtung der ersten Gruppe an Anschlusseinrichtungen ist mit genau einer der Anschlusseinrichtungen der zweiten Gruppe an Anschlusseinrichtungen über jeweils eine Verbindungseinrichtung elektrisch leitend verbunden. Es ist somit immer genau eine Anschlusseinrichtung der ersten Gruppe an Anschlusseinrichtungen über genau eine Verbindungseinrichtung mit genau einer Anschlusseinrichtung der zweiten Gruppe an Anschlusseinrichtungen elektrisch leitend verbunden. Dabei sind bevorzugt die Anschlusseinrichtungen der ersten Gruppe an Anschlusseinrichtungen in dem elektrischen Verbinder zueinander elektrisch isoliert und die Anschlusseinrichtungen der zweiten Gruppe an Anschlusseinrichtungen in dem Verbinder zueinander elektrisch isoliert und die Verbindungseinrichtungen in dem elektrischen Verbinder zueinander elektrisch isoliert, so dass bei einer elektrisch leitenden Verbindung einer Anschlusseinrichtung der ersten Gruppe an Anschlusseinrichtungen mit einem bestimmten ersten Leitungsdraht und dem elektrischen Verbinden einer dieser Anschlusseinrichtung zugeordneten Anschlusseinrichtung der zweiten Gruppe an Anschlusseinrichtungen mit einem zweiten Leitungsdraht über die diesen beiden Anschlusseinrichtungen zugeordnete Verbindungseinrichtung erster und zweiter Leitungsdraht elektrisch leitend miteinander verbunden sind und gegenüber den anderen Anschlusseinrichtungen und Verbindungseinrichtungen des elektrischen Verbinders isoliert sind. In der Betriebsposition ist jeder Leitungsdraht der ersten Gruppe an Leitungsdrähten an jeweils einer Anschlusseinrichtung der ersten Gruppe an Anschlusseinrichtungen angeschlossen, und jeder Leitungsdraht der zweiten Gruppe an Leitungsdrähten ist an jeweils einer Anschlusseinrichtung der zweiten Gruppe an Anschlusseinrichtungen angeschlossen. In der Betriebsposition sind ferner die Verbindungseinrichtungen in von dem elektrischen Verbinder ausgebildeten Kanälen geführt und zwischen den durch sie verbundenen Anschlusseinrichtungen von der Zugangsseite aus zugänglich. Der elektrische Verbinder weist somit Kanäle auf, die entlang der Längsrichtung verlaufen, entlang der Transversalrichtung nebeneinander angeordnet sind und an einer entlang der Vertikalrichtung ausgebildeten Zugangsseite des elektrischen Verbinders offen sind, so dass die Verbindungseinrichtungen von der Zugangsseite aus zugänglich sind, die bevorzugt identisch mit der vorgenannten Zugangsseite der Stromleitschienen ist. Die Stromleitschienen sind in der Betriebsposition so relativ zueinander angeordnet, dass ihre Zugangsseiten jeweils zur selben Richtung weisen und zur selben Richtung weisen wie die Zugangsseite der in der Betriebsposition von dem elektrischen Verbinder ausgebildeten Kanäle.

Das erfindungsgemäße System bringt im Vergleich zu gattungsgemäßen Systemen wesentliche Vorteile mit sich. Durch das Vorsehen eines wie erläutert ausgebildeten elektrischen Verbinders ist zum einen eine einfache elektrische Verbindung der Leitungsdrähte der Stromleitschienen miteinander ermöglicht, und zum anderen ist darüber hinaus eine Kontaktierbarkeit der Leitungsdrähte beider Stromleitschienen auch innerhalb des Längserstreckungsbereichs der Verbindungseinrichtungen und somit innerhalb der Längserstreckung des elektrischen Verbinders ermöglicht, da die Verbindungseinrichtungen mit den in den jeweiligen Stromleitschienen angeordneten Leitungsdrähten elektrisch leitend verbunden sind und von der Zugangsseite aus zugänglich und somit elektrisch kontaktierbar sind. Besonders bevorzugt umfasst das erfindungsgemäße System eine Kontakteinrichtung, die dazu ausgebildet ist, mit ihren Kontakten in die Kanäle der Stromleitschienen eingeführt zu werden zum Kontaktieren der in den Stromleitschienen angeordneten Leitungsdrähte, wobei in der Betriebsposition diese Kontakteinrichtung sowohl innerhalb des gesamten Längserstreckungsbereichs der Stromleitschienen als auch innerhalb des Längserstreckungsbereichs der Verbindungseinrichtungen, bevorzugt innerhalb des gesamten Längserstreckungsbereichs des elektrischen Verbinders, von der Zugangsseite aus in die Kanäle der Stromleitschienen bzw. die Kanäle des elektrischen Verbinders eingeführt werden kann unter Kontaktierung der Leitungsdrähte beider Stromleitschienen, bei Einführen in die Kanäle des elektrischen Verbinders mittelbar, indem die Kontakte der Kontakteinrichtung die Verbindungseinrichtungen oder insbesondere Anschlusseinrichtungen des elektrischen Verbinders kontaktieren. Besonders bevorzugt sind die Stromleitschienen und der elektrische Verbinder dergestalt zueinander korrespondierend ausgebildet, dass eine solche Kontakteinrichtung an beliebiger Stelle entlang der Längsrichtung von der Zugangsseite aus in jede der beiden Stromleitschienen und in die Kanäle des Verbinders eingeführt werden kann unter elektrischer Kontaktierung beider Leitungsdrähte und der elektrischen Verbindungseinrichtungen, wobei je nach Längsposition der Kontakteinrichtung relativ zu der Anordnung von erster und zweiter Stromleitschiene und elektrischem Verbinder eine unmittelbare Kontaktierung der Kontakte der Kontakteinrichtung an der ersten Gruppe an Leitungsdrähten, an der zweiten Gruppe an Leitungsdrähten oder an den Verbindungseinrichtungen oder an den Abschlusseinrichtungen erfolgt.

Besonders bevorzugt verbindet in der Betriebsposition jeweils einer der von dem elektrischen Verbinder ausgebildeten Kanäle einen der Kanäle der ersten Stromleitschiene mit einem der Kanäle der zweiten Stromleitschiene durchgehend. Dies bringt den besonderen Vorteil mit sich, dass eine durchgehende Führung gewährleistet ist, in der sich ein bestimmter Leitungsdraht der ersten Gruppe an Leitungsdrähten, eine zugeordnete bestimmte Anschlusseinrichtung der ersten Gruppe an Anschlusseinrichtungen, eine zugeordnete Verbindungseinrichtung, eine zugeordnete Anschlusseinrichtung der zweiten Gruppe an Anschlusseinrichtungen und ein zugeordneter Leitungsdraht der zweiten Gruppe an Leitungsdrähten befindet. Indem der Kanal des elektrischen Verbinders die Kanäle der Stromleitschienen miteinander durchgehend verbindet und dabei sämtliche Kanäle per Definition an ihrer Zugangsseite offen sind, bevorzugt durchgehend offen sind, ist eine bevorzugt durchgehende Kontaktierbarkeit ausgehend von der ersten Stromleitschiene über den elektrischen Verbinder hinweg bis zur zweiten Stromleitschiene gewährleistet. Besonders bevorzugt weist der durchgehende Kanal innerhalb des Längserstreckungsbereichs des elektrischen Verbinders durchgehend eine solche Öffnungsbreite an der Zugangsseite auf, die der Öffnungsbreite der Kanäle der Stromleitschienen entspricht oder größer ist. An dieser Stelle sei angemerkt, dass allgemein bevorzugt ein Kanal einen Kanalboden und zumindest eine Kanalwand aufweist. Die in Transversalrichtung äußersten Kanäle der Stromleitschiene können beispielsweise nur eine Wand aufweisen, die zwischen den äußersten Kanälen angeordneten Kanäle weisen üblicherweise jeweils zwei Kanalwände auf, wobei jeweils eine Kanalwand, die zwischen zwei benachbarten Kanälen angeordnet ist, beiden benachbarten Kanälen zugeordnet sein kann. Der Kanalboden ist dabei der Zugangsseite vertikal gegenüberliegend angeordnet, und die Kanalwände erstrecken sich ausgehend von dem Kanalboden entlang der Vertikalrichtung zur Zugangsseite hin, so dass in den Kanälen angeordnete Leitungsdrähte von der Zugangsseite aus zugänglich sind. Dabei umschließen Kanalboden und Kanalwände bevorzugt über die Längserstreckung des jeweiligen Kanals hinweg in der Betriebsposition ununterbrochen den in dem jeweiligen Kanal angeordneten Leitungsdraht. Bevorzugt ist jeder Kanal der Stromleitschiene zwischen zwei ihm in Transversalrichtung begrenzenden Kanalwänden eingeschlossen. Eine durchgehende Verbindung zwischen den Kanälen der Stromleitschienen durch den Kanal des elektrischen Verbinders ist somit gewährleistet, indem zumindest ein Kanalboden oder zumindest eine Kanalwand, bevorzugt ein Kanalboden und zumindest eine Kanalwand, in der Betriebsposition ausgebildet ist, die in den Längserstreckungsabschnitten der beiden Stromleitschienen von den Kanalwänden der Kanäle der Stromleitschienen ausgebildet werden und in dem Längserstreckungsbereich des elektrischen Verbinders von den Kanalwänden der Kanäle des elektrischen Verbinders ausgebildet werden und die den in dem jeweiligen Kanal angeordneten Leitungsdraht über die Längserstreckung des Kanals hinweg durchgehend umgeben, bevorzugt durchgehend sowohl an seiner vertikal von der Zugangsseite abgewandten Seite als auch an seiner zu einem jeden benachbarten Leitungsdraht weisenden Seite durchgehend verdecken. Besonders bevorzugt greifen in der Betriebsposition Kanalwände des elektrischen Verbinders und Kanalwände der Stromleitschiene kammartig ineinander. Besonders bevorzugt umgreift der elektrische Verbinder mit seinen Kanalwänden die genannten Kanäle der Stromleitschiene außerhalb der die Kanäle der Stromleitschiene begrenzenden Kanalwandinnenseiten der Stromleitschiene. Durch das kammartige Ineinandergreifen ist ein Überlappungsbereich entlang der Längsrichtung zwischen den Kanalwänden der Stromleitschienen und den Kanalwänden des elektrischen Verbinders gewährleistet. Dies kann für die elektrische Isolierung der Leitungsdrähte, Anschlusseinrichtungen und Verbindungseinrichtungen am Übergang zwischen elektrischem Verbinder und Stromleitschienen besonders vorteilhaft sein. Insbesondere können hierdurch die Luft- und Kriechstrecken vergrößert sein. Durch ein Umgreifen der Kanäle der Stromleitschiene durch die Kanalwände des elektrischen Verbinders außerhalb der die Kanäle der Stromleitschiene begrenzenden Kanalwandinnenseiten der Stromleitschiene kann darüber hinaus sichergestellt sein, dass der durchgehende Kanal, der abschnittsweise durch die Kanäle der Stromleitschiene und den Kanal des elektrischen Verbinders ausgebildet ist, eine durchgehend ausreichend große Öffnung aufweist, durch die die Kontakte einer Kontakteinrichtung in Vertikalrichtung von der Zugangsseite aus in diesen durchgehenden Kanal einführbar sind zum Kontaktieren der Leitungsdrähte bzw. Anschlusseinrichtungen bzw. Verbindungseinrichtungen. Allgemein überlappt der elektrische Verbinder in der Betriebsposition bevorzugt in Längsrichtung sowohl mit der ersten Stromleitschiene als auch mit der zweiten Stromleitschiene. Besonders bevorzugt weist der elektrische Verbinder einen Schutzplattenabschnitt auf, der sich an der der Zugangsseite abgewandten Vertikalseite der beiden Stromleitschienen jeweils in Längsrichtung entlang beider Stromleitschienen erstreckt und in Transversalrichtung zumindest über den Erstreckungsbereich beider Stromleitschienen hinweg erstreckt, innerhalb dessen die Leitungsdrähte der Stromleitschienen angeordnet sind. Durch einen solchen Schutzplattenabschnitt kann eine zuverlässige Isolierung der Leitungsdrähte über den Erstreckungsbereich des Verbinders hinweg und an den Übergängen des elektrischen Verbinders zu den Stromleitschienen gewährleistet sein, insbesondere gegenüber der Tragschiene, an der die Stromleitschiene befestigt ist. An dieser Stelle sei allgemein darauf hingewiesen, dass besonders bevorzugt die Stromleitschienen und der elektrische Verbinder an dem Tragschienenboden angeordnet sind, von dem aus sich die Tragschienenseitenwände in Vertikalrichtung weg erstrecken. Dies kann eine Kontaktierung der Leitungsdrähte besonders vereinfachen, da ein Montagekörper, an dem eine Kontakteinrichtung angeordnet ist, in Vertikalrichtung auf die Tragschiene zubewegt werden kann, bis er an der Tragschiene anliegt und an dieser fixiert ist, wobei während des aufeinander Zubewegens in Vertikalrichtung von Montagekörper zu Tragschiene hin die an dem Montagekörper angeordnete Kontakteinrichtung mit ihren Kontakten in die Kanäle der Stromleitschiene oder, je nach Position entlang der Längsrichtung, in die Kanäle des elektrischen Verbinders eingreifen und die elektrischen Leitungsdrähte der Stromleitschienen direkt kontaktieren kann bzw. eine der Gruppen an Anschlusseinrichtungen oder die Verbindungseinrichtungen des elektrischen Verbinders direkt kontaktieren kann.

Aufgrund der erfindungsgemäßen Ausgestaltung, insbesondere in besonders vorteilhaften Ausführungsformen, ermöglicht das erfindungsgemäße System die Realisierung eine großen Anzahl an in Transversalrichtung nebeneinander angeordneten Leitungsdrähten unter Gewährleistung einer hinreichenden Isolierung der Leitungsdrähte zueinander, insbesondere auch im Hinblick auf Kriech- und Luftstrecken, insbesondere auch im Bereich des Übergangs von den Stromleitschienen zu dem elektrischen Verbinder in der Betriebsposition. In besonders bevorzugten Ausführungsformen sind die Transversalmitten von zwei in Transversalrichtung benachbarten Kanälen in Transversalrichtung um eine Distanz voneinander beabstandet, die weniger als 5 mm, insbesondere weniger als 4 mm beträgt und/oder weniger als einen Betrag beträgt, der sich aus der Summe ergibt, die aus der Hälfte der Erstreckungslänge eines ersten Leitungsdrahts in Transversalrichtung, der in einem der beiden benachbarten Kanäle angeordnet ist, der Hälfte der Erstreckungslänge eines zweiten Leitungsdrahts in Transversalrichtung, der in dem anderen der beiden benachbarten Kanäle angeordnet ist, und dem Wert von 2,5 mm, insbesondere von 2,1 mm, gebildet ist, wobei dies bevorzugt für die Mehrzahl der Paare an benachbarten Kanälen der Stromleitschiene gilt, insbesondere für sämtliche Paare an benachbarten Kanälen der Stromleitschiene. Besonders bevorzugt sind die Transversalmitten von zwei in Transversalrichtung benachbarten Kanälen der Stromleitschienen in Transversalrichtung voneinander um eine Distanz voneinander beabstandet, die zwischen 3 mm und 5 mm, insbesondere zwischen 3 mm und 4 mm liegt, und/oder die in einem Wertebereich liegt, der sich aus der Summe ergibt, die aus der Hälfte der Erstreckungslänge eines ersten Leitungsdrahts in Transversalrichtung, der in einem der beiden benachbarten Kanäle angeordnet ist, der Hälfte der Erstreckungslänge eines zweiten Leitungsdrahts in Transversalrichtung, der in dem anderen der beiden benachbarten Kanäle angeordnet ist, und einem Wert zwischen 1,5 mm und 2,5 mm, insbesondere zwischen 1,8 mm und 2,1 mm, gebildet ist, wobei dies bevorzugt für die Mehrzahl der Paare an benachbarten Kanälen der Stromleitschienen gilt, insbesondere für sämtliche Paare an benachbarten Kanälen der Stromleitschienen. Besonders bevorzugt ist in der Betriebsposition die zur Zugangsseite gewandte Vertikalseite des Leitungsdrahts, der in einem der Kanäle angeordnet ist, um eine Distanz von dem zur Zugangsseite weisenden Vertikalende der beiden den Kanal begrenzenden Kanalwände beabstandet, die zwischen 2,0 und 5,0 mm beträgt, insbesondere zwischen 2,5 und 3,5 mm beträgt, wobei dies bevorzugt in jeder der Stromleitschienen für die Mehrzahl der darin vorgesehenen Leitungsdrähte gilt, bevorzugt für sämtliche Leitungsdrähte in der beschriebenen Betriebsposition. Besonders bevorzugt weisen die Stromleitschienen ein Verhältnis von Anzahl an in Transversalrichtung angeordneten Kanälen, in denen die Leitungsdrähte in der Betriebsposition angeordnet sind, zu der Transversalerstreckung der Stromleitschiene auf, mit der sich die Stromleitschiene zwischen den Mittelpunkten ihrer beiden in Transversalrichtung äußersten Kanälen, die somit die voneinander in Transversalrichtung am weitesten beabstandeten Kanäle sind, erstreckt, das mindestens 0,25, insbesondere mindestens 0,28 beträgt. Besonders bevorzugt weisen die Stromleitschienen ein Verhältnis von Anzahl an in Transversalrichtung angeordneten Kanälen, in denen die Leitungsdrähte in der Betriebsposition angeordnet sind, zu der Transversalerstreckung der Stromleitschiene auf, mit der sich die Stromleitschiene zwischen den transversalen Außenseiten der Kanalwände ihrer beiden in Transversalrichtung äußersten Kanäle, die somit die Transversalseiten der Kanalwände sind, die in Transversalrichtung von dem jeweiligen Kanal wegweisen, den sie umgeben, wobei bei es sich bei den beiden Kanälen um die beiden voneinander in Transversalrichtung am weitesten beabstandeten Kanäle der Stromleitschiene handelt, das mindestens 0,23, insbesondere mindestens 0,26 beträgt. Dabei sind bevorzugt in der Betriebsposition die Leitungsdrähte dergestalt in den Kanälen der Stromleitschiene angeordnet, dass die Querschnittsmittelpunkte, bezogen auf einen Querschnitt senkrecht zur Längsrichtung, von zumindest 50 %, insbesondere mindestens 70 %, insbesondere mindestens 90 %, der Leitungsdrähte von einer Geraden, die in Transversalrichtung und dabei senkrecht zur Vertikalrichtung verläuft, um weniger als 3 mm, insbesondere weniger als 1 mm beabstandet sind, insbesondere auf dieser Gerade liegen. Das Vorsehen der genannten Distanzen bzw. Verteilungen ist insbesondere dafür vorteilhaft, dass zwischen den Leitungsdrähten innerhalb der Längserstreckung der Stromleitschienen ausreichend große Kriech- und Luftstrecken gewährleistet sind und darüber hinaus auch bei dem Übergang von den Stromleitschienen zu dem elektrischen Verbinder, wobei insbesondere weiterhin ausreichend starke Kanalwanddicken gegeben sind, um ein kammartiges Ineinandergreifen bzw. Vorsehen von Aussparungen in den Kanalwänden zu ermöglichen, und bevorzugt weiterhin eine möglichst gute Kontaktierbarkeit der Leitungsdrähte durch eine Kontakteinrichtung ermöglicht ist.

Besonders bevorzugt ist durch jeweils einen der Leitungsdrähte der ersten Gruppe an Leitungsdrähten, jeweils eine der Anschlusseinrichtungen der ersten Gruppe an Anschlusseinrichtungen, jeweils eine der Verbindungseinrichtungen, jeweils eine der Anschlusseinrichtungen der zweiten Gruppe an Anschlusseinrichtungen und jeweils einen der Leitungsdrähte der zweiten Gruppe an Leitungsdrähten in der Betriebsposition jeweils ein von der Zugangsseite aus entlang der Längsrichtung durchgehend kontaktierbarer elektrischer Leiter ausgebildet. Besonders bevorzugt sind die verschiedenen durchgehenden kontaktierbaren elektrischen Leiter, die durch verschiedene Leitungsdrähte der ersten Gruppe an Leitungsdrähten, Anschlusseinrichtungen der ersten Gruppe an Anschlusseinrichtungen, Verbindungseinrichtungen, Anschlusseinrichtungen der zweiten Gruppe an Anschlusseinrichtungen und Leitungsdrähte der zweiten Gruppe an Leitungsdrähte jeweils ausgebildet sind, zueinander elektrisch isoliert, insbesondere über den gesamten Längserstreckungsbereich ausgehend von der ersten Stromleitschiene über den elektrischen Verbinder hinweg zur zweiten Stromleitschiene durchgehend. Durch das Vorsehen eines solchen durchgehend kontaktierbaren elektrischen Leiters ist die Variabilität der Einsatzmöglichkeit des Systems besonders groß, da über die Längserstreckung des elektrischen Leiters hinweg eine Kontakteinrichtung mit ihren Kontakten an beliebiger Position von der Zugangsseite aus auf diesen Leiter aufgebracht und diesem elektrisch verbunden werden kann.

In einer Ausführungsform sind zumindest eine Mehrheit der Anschlusseinrichtungen, insbesondere sämtliche Anschlusseinrichtungen als in einer Längsrichtung offene Kontakte, insbesondere Gabelkontakte ausgebildet. Der elektrische Verbinder ist bevorzugt dergestalt korrespondierend zu den Stromleitschienen ausgebildet, dass die in einer der Stromleitschienen angeordneten Leitungsdrähte elektrisch leitend mit einer der Gruppen an Anschlusseinrichtungen verbindbar sind, indem die Stromleitschiene entlang der Längsrichtung auf den elektrischen Verbinder zubewegt wird unter Einführung eines jeden ihrer sämtlichen Leitungsdrähte in jeweils einen der durch die Gruppe an Anschlusseinrichtungen ausgebildeten Kontakte. Durch diese Ausführungsform ist die Verbindung zweier Stromleitschienen durch den elektrischen Verbinder besonders vereinfacht. Besonders bevorzugt weisen die Gabelkontakte eine Längserstreckung von mindestens 3 mm, insbesondere mindestens 5 mm auf, innerhalb derer die Leitungsdrähte ausgehend von der Betriebsposition in elektrisch leitendem Gleitkontakt mit den Gabelkontakten relativ zu den Gleitkontakten in Längsrichtung verschiebbar in den Gleitkontakten gelagert sind. Besonders bevorzugt ist das System dergestalt ausgebildet, dass eine Montageposition realisierbar ist, in der erstes und zweites Leuchtenelement realisiert sind, d. h. Tragschiene, Stromleitschiene und Gruppe an Leitungsdrähten des jeweiligen Leuchtenelements sich zueinander in derselben Position befinden, die sie auch in der Betriebsposition innehaben, wobei in der Montageposition der elektrische Verbinder an dem ersten Leuchtenelement fixiert ist und dabei die Anschlusseinrichtungen seiner ersten Gruppe an Anschlusseinrichtungen mit den Leitungsdrähten der ersten Gruppe an Leitungsdrähten elektrisch leitend verbunden sind, wobei ausgehend von der Montageposition die Leuchtenelemente in Längsrichtung aufeinander zubewegbar sind, bis ihre Tragschienen dergestalt nebeneinander angeordnet sind, dass sie mechanisch aneinander fixierbar sind zur Realisierung der Betriebsposition, wobei während dieses aufeinander Zubewegens der Leuchtenelemente zueinander die Leitungsdrähte der zweiten Gruppe an Leitungsdrähte, die in der Stromleitschiene des zweiten Leuchtenelements angeordnet sind, in die Anschlusseinrichtungen der zweiten Gruppe an Anschlusseinrichtungen einführbar und mit diesem kontaktierbar sind zur Realisierung der in der Betriebsposition vorgesehenen elektrisch leitenden Verbindung zwischen den Leitungsdrähten der ersten Gruppe an Leitungsdrähten und der zweiten Gruppe an Leitungsdrähten durch den elektrischen Verbinder.

In einer Ausführungsform sind jeweils eine Anschlusseinrichtung der ersten Gruppe an Anschlusseinrichtungen, eine der Anschlusseinrichtungen der zweiten Gruppe an Anschlusseinrichtungen und eine der Verbindungseinrichtungen miteinander verbunden unter Ausbildung einer in Längsrichtung durchgehenden, stromleitenden Einheit, wobei die unterschiedlichen stromleitenden Einheiten in der Transversalrichtung nebeneinander angeordnet sind und in dem Betriebszustand jede stromleitende Einheit an einen Leitungsdraht der ersten Gruppe an Leitungsdrähten und an einen Leitungsdraht der zweiten Gruppe an Leitungsdrähten angeschlossen ist. Besonders bevorzugt sind die stromleitenden Einheiten einstückig ausgebildet, insbesondere integral einstückig hergestellt. Beispielsweise sind die stromleitenden Einheiten jeweils separat hergestellte und in ein Verbindergehäuse des Verbinders eingesetzte Bauteile, insbesondere aus einem Metall hergestellte Bauteile. Besonders bevorzugt ist die stromleitende Einheit über ihre Längserstreckung hinweg so ausgestaltet, dass sie in der Betriebsposition an der Zugangsseite einen Höhenversatz in Vertikalrichtung von weniger als 3 mm, insbesondere weniger als 2 mm aufweist, insbesondere keinen Höhenversatz in Vertikalrichtung aufweist. Dies ist besonders vorteilhaft, damit eine zuverlässige Kontaktierbarkeit durch eine Kontakteinrichtung über die Längserstreckung der stromleitenden Einheit hinweg gewährleistet sein kann. Besonders bevorzugt sind die stromleitende Einheit und die Leitungsdrähte der Gruppen an Leitungsdrähten der beiden Stromleitschienen dergestalt zueinander korrespondierend ausgebildet, dass der Höhenversatz zwischen der zur Zugangsseite gewandten Seite der Leitungsdrähte an ihrer Stelle des Übergangs in die stromleitende Einheit und der zur Zugangsseite gewandten Seite der stromleitenden Einheit über ihre Längserstreckung hinweg durchgehend weniger als 3 mm, insbesondere weniger als 2 mm beträgt. Allgemein weist bevorzugt der elektrische Verbinder ein Verbindergehäuse auf, in dem die stromleitenden Einheiten positionsfest und zueinander isoliert aufgenommen sind. Besonders bevorzugt ist das Verbindergehäuse aus Kunststoff hergestellt, insbesondere mittels Spritzguss. Besonders bevorzugt ist das Verbindergehäuse dergestalt starr ausgebildet, dass das Verbindergehäuse in einer Position des elektrischen Verbinders, in der dieser separat von allen weiteren Bestandteilen des Systems ist, dieselbe Form aufweist wie in der Betriebsposition. Hierdurch kann die Stabilität des Verbindergehäuses besonders begünstigt sein. Allgemein ist das Vorsehen eines Verbindergehäuses besonders vorteilhaft, um eine einfache und sichere Handhabbarkeit des elektrischen Verbinders zu gewährleisten, insbesondere während der Realisierung der Betriebsposition.

In einer Ausführungsform weist der elektrische Verbinder in Längsrichtung zwischen seinen beiden Gruppen an Anschlusseinrichtungen eine Einspeiseeinrichtung zum Speisen der Anschlusseinrichtungen mit einer externen elektrischen Energiequelle auf. Die Einspeiseeinrichtung ist somit mit sämtlichen Anschlusseinrichtungen des elektrischen Verbinders elektrisch verbunden. Bei dieser besonders vorteilhaften Ausführungsform ist der elektrische Verbinder nicht nur zum Verbinden von zwei Stromleitschienen geeignet sondern darüber hinaus zum Anschließen der Leitungsdrähte der Stromleitschienen an ein externes Leitungsnetz, beispielsweise Versorgungsnetz oder Steuerleitungsnetz. Besonders bevorzugt weist die Einspeiseeinrichtung eine Gruppe an Speisekontakten auf, die mit einem Winkel zur Längsrichtung, der > 0° ist, bevorzugt mindestens 20° beträgt, insbesondere mindestens 45° beträgt, insbesondere zwischen 45° und 135° beträgt, zu den Verbindungseinrichtungen angeordnet sind. Die Anordnung bezieht sich dabei darauf, dass die Speisekontakte sich von den in Längsrichtung erstreckenden Verbindungseinrichtungen in eine Richtung weg erstrecken, die zur Längsrichtung abgewinkelt ist, so dass die Speisekontakte von einer Richtung, die zur Längsrichtung abgewinkelt ist, zugänglich und kontaktierbar sind. Dies bringt den besonderen Vorteil mit sich, dass eine Einspeisung mit einer Komponente quer zur Längsrichtung an die Einspeiseeinrichtung herangeführt werden kann, beispielsweise von außerhalb des Tragschienenbodens zur Einspeiseeinrichtung hin mit einer vertikalen Komponente, insbesondere entlang der Vertikalrichtung. Besonders bevorzugt sind die Anschlusseinrichtungen der beiden Gruppen an Anschlusseinrichtungen parallel zueinander angeordnet.

Besonders bevorzugt weisen die Anschlusseinrichtungen der ersten Gruppe an Anschlusseinrichtungen in die entgegengesetzte Richtung der Anschlusseinrichtung der zweiten Gruppe an Anschlusseinrichtungen. Besonders bevorzugt sind die Anschlusseinrichtungen jeweils entlang der Längsrichtung kontaktierbar durch Zuführen von Leitungsdrähten zu den Anschlusseinrichtungen, wobei die beiden Gruppen an Anschlusseinrichtungen dergestalt voneinander wegweisend ausgerichtet sind, dass durch eine jeweils entgegengesetzte Bewegung von Leitungsdrähten diese in die jeweiligen Anschlusseinrichtungen der unterschiedlichen Gruppen an Anschlusseinrichtungen eingeführt werden können. Besonders bevorzugt erstreckt sich die Einspeiseeinrichtung entlang der Längsrichtung ausgehend von den Verbindungseinrichtungen in Vertikalrichtung zum Tragschienenboden hin, wobei die Verbindungseinrichtungen in ihrer vertikalen Erstreckung auf den vertikalen Erstreckungsbereich begrenzt sind, der zwischen der von der Zugangsseite abgewandten Seite der Kanalböden der Stromleitschienen und der Zugangsseite der Kanäle liegt und von dem elektrischen Verbinder im Längserstreckungsbereich seiner Verbindungseinrichtungen ausgebildet ist. Besonders bevorzugt erstreckt sich die Einspeiseeinrichtung mit ihren Speisekontakten ausgehend von den Verbindungseinrichtungen zum Tragschienenboden hin, insbesondere über den Tragschienenboden hinaus, wobei die Speisekontakte in Vertikalrichtung von außerhalb des Tragschienenbodens und somit von außerhalb eines vom Tragschienenboden und Tragschienenseitenwänden umschlossenen Innenraums aus durch ein Einspeiseelement kontaktierbar sind, wobei das Einspeiseelement und die Fixiereinrichtung mit ihren Speisekontakten bevorzugt als zueinander korrespondierende Steckeinrichtungen ausgebildet sind. Allgemein weist das System bevorzugt neben den Leuchtenelementen Funktionsmodule auf, beispielsweise Indirekt-Leuchtmodule, Funkeinheiten, Sensoren oder dergleichen, die eine Speisevorrichtung aufweisen, die zu der Einspeiseeinrichtung korrespondierend ausgebildet ist, und die über die Einspeiseeinrichtung an die Leitungsdrähte der Stromleitschienen in der Betriebsposition angeschlossen und mit diesen verbunden werden können. Hierdurch kann beispielsweise eine elektrische Versorgung dieser Funktionsmodule gewährleistet sein oder ein Versorgen von Leitungsdrähten der Stromleitschienen mit Signalen aus diesen Funktionsmodulen. Allgemein ist bevorzugt die Einspeiseeinrichtung dazu ausgebildet, ein Einspeisen von elektrischen Signalen bzw. elektrische Versorgung von außen auf die Leitungsdrähte der Stromleitschienen zu ermöglichen und/oder ein Ausgeben von elektrischen Signalen bzw. elektrischer Versorgung ausgehend von den Leitungsdrähten nach außen an ein Funktionsmodul zu ermöglichen.

Erfindungsgemäß weist das System zumindest einen, insbesondere mehrere, in Längsrichtung langgestreckten Montagekörper auf, an dessen einer Seite, bezogen auf die Vertikalrichtung, eine Kontakteinrichtung angeordnet ist, wobei der Montagekörper mit einer Bewegung entlang der Vertikalrichtung auf eine Tragschienen zubewegbar ist, an der eine der Stromleitschienen fixiert ist, die an den elektrischen Verbinder angeschlossen ist, bis der Montagekörper an der Tragschiene anliegt und über ein Befestigungsmittel an der Tragschiene fixierbar ist, d. h. bis er mit einer solchen Position an der Tragschiene anliegt, in der er über ein Befestigungsmittel an der Tragschiene positionsfest fixierbar ist. Bevorzugt handelt es sich dabei um Tragschiene, Stromleitschiene und Leitungsdrähte einer der Leuchtenelemente in der Betriebsposition. Die Kontakteinrichtung ist bevorzugt dazu ausgebildet, in einer beliebigen Längsposition innerhalb der Längserstreckung der Tragschiene entlang der Stromleitschiene und entlang des elektrischen Verbinders in elektrischen Kontakt mit den Leitungsdrähten der Stromleitschiene gebracht zu werden. Erfindungsgemäß ist die Kontakteinrichtung dazu ausgebildet, in einer beliebigen Längsposition innerhalb der Längserstreckung der Tragschiene entlang der Stromleitschiene während der Bewegung in elektrischen Kontakt mit den Leitungsdrähten der Stromleitschiene gebracht zu werden, mit der der Montagekörper entlang der Vertikalrichtung auf die Tragschiene zubewegbar ist, bis er in seiner Position an der Tragschiene anliegt, in der er über ein Befestigungsmittel an der Tragschiene fixierbar ist. Diese Ausführungsform bringt den besonderen Vorteil mit sich, dass der Montagekörper mit seiner Kontakteinrichtung an einer beliebigen Stelle entlang der Längsrichtung an der Tragschiene im Längserstreckungsbereich der Stromleitschiene angebracht werden kann und dabei seine Kontakteinrichtung in elektrischen Kontakt mit den Leitungsdrähten der Stromleitschiene, die an der Tragschiene befestigt ist, gebracht werden kann. Dabei ist die Stromleitschiene bevorzugt in derselben Position an der Tragschiene befestigt, in der sie sich in der Betriebsposition befindet. Besonders bevorzugt ist der Montagekörper dergestalt ausgebildet, dass er ausgehend von der Betriebsposition, in der sich die Leuchtenelemente befinden, innerhalb eines Längserstreckungsbereichs, der sich von der Längsmitte der ersten Stromleitschiene des ersten Leuchtenelements bis zur Längsmitte der zweiten Stromleitschiene des zweiten Leuchtenelements durchgehend erstreckt, an jeder beliebigen Längsposition innerhalb dieses Längserstreckungsbereichs wie erläutert auf die Tragschiene zubewegbar ist, bis er an dieser anliegt und wie erläutert fixierbar ist und seine Kontakteinrichtung mit den Leitungsdrähten beider Stromleitschienen, die in der Betriebsposition durch den elektrischen Verbinder miteinander elektrisch leitend verbunden sind, in elektrischen Kontakt gebracht werden kann, insbesondere während der genannten Bewegung auf die Tragschiene hin.

In einer Ausführungsform sind die Kanäle der Stromleitschienen jeweils durch einen Kanalboden und zwei sich entlang der Vertikalrichtung von dem Kanalboden weg erstreckende Kanalwände begrenzt. Besonders bevorzugt weisen zumindest an den Längsenden der Stromleitschienen, die in der Betriebsposition zu dem elektrischen Verbinder gewandt sind, insbesondere an beiden Längsenden der beiden Stromleitschienen, die zwischen zwei benachbarten Kanälen liegenden Kanalwände eine sich ausgehend von dem Längsende über einen Längserstreckungsabschnitt erstreckende Aussparung auf, wobei sich die Aussparung bevorzugt entlang der Vertikalrichtung in der Betriebsposition zumindest über die vertikale Erstreckung der in den Kanälen jeweils angeordneten Leitungsdrähte hinweg, insbesondere darüber hinaus, erstreckt. Die Aussparungen sind bevorzugt von den jeweiligen Längsenden aus zugänglich. Das Vorsehen solcher Aussparungen kann das Einführen von korrespondierenden isolierenden Abschnitten des elektrischen Verbinders besonders begünstigen, wodurch der elektrische Verbinder und die Stromleitschienen mit Abschnitten ineinandergreifen können zum Erhöhen der Kriech- und Luftstrecken und somit zum Bereitstellen einer verbesserten Isolierung der jeweils in Transversalrichtung nebeneinander angeordneten Leitungsdrähte und Anschlusseinrichtungen an den Übergangsstellen zwischen den Leitungsdrähten und den Anschlusseinrichtungen. Besonders bevorzugt erstrecken sich die Aussparungen ausgehend von ihrem in der Betriebsposition zur Tragschiene gewandten Ende bis zur Zugangsseite hin, so dass sie zur Zugangsseite hin offen sind. Besonders bevorzugt erstrecken sich die Aussparungen über die gesamte vertikale Erstreckung der Stromleitschienen hinweg, so dass die Aussparungen in Vertikalrichtung durch die Stromleitschienen hindurchgehen. Dies kann für ein vereinfachtes Einführen bzw. Verbinden von elektrischem Verbinder und Stromleitschiene besonders vorteilhaft sein. Besonders bevorzugt weist der elektrische Verbinder zwischen je zwei in Transversalrichtung benachbarten Anschlusseinrichtungen einer jeden Gruppe an Anschlusseinrichtungen jeweils eine Trennwand auf, wobei in der Betriebsposition jede der Trennwände in jeweils einer der Aussparungen angeordnet ist. Hierdurch kann die vorbeschriebene Isolierung besonders begünstigt sein und das Erreichen der Betriebsposition besonders vereinfacht sein. Besonders bevorzugt erstrecken sich die Trennwände von einer von dem elektrischen Verbinder ausgebildeten Schutzplatte in Vertikalrichtung weg, in der Betriebsposition zur Zugangsseite hin, wobei bevorzugt in der Betriebsposition die Schutzplatte in Längsrichtung mit beiden Stromleitschienen überlappt und in Vertikalrichtung bevorzugt zwischen Tragschiene und Stromleitschiene des jeweiligen Leuchtenelements angeordnet ist. Die Schutzplatte kann zwei voneinander separate, d. h. beabstandete, Schutzplattenabschnitte aufweisen, wobei jeder der Schutzplattenabschnitte jeweils einer Gruppe an Anschlusseinrichtungen zugeordnet ist und in der Betriebsposition jeweils einer der Stromleitschienen zugeordnet ist, wobei die jeweiligen Schutzplattenabschnitte wie erläutert relativ zur jeweiligen Stromleitschiene bzw. Tragschiene angeordnet sind und wobei die Schutzplattenabschnitte bevorzugt durchgehend mit den von dem elektrischen Verbinder ausgebildeten Kanälen verbunden sind, insbesondere zumindest einen Abschnitt dieser Kanäle ausbilden, so dass bevorzugt der elektrische Verbinder in der Betriebsposition an seiner zu der Tragschiene der Leuchtenelemente gewandten Seite als durchgehende Isolierung ausgebildet ist, die sich zwischen den Schutzplattenabschnitten in Längsrichtung durchgehend erstreckt. Allgemein weist bevorzugt der elektrische Verbinder an einer Seite entlang der Vertikalrichtung eine Schutzplatte auf, wobei in der Betriebsposition die Schutzplatte an der der Zugangsseite abgewandten Seite der Stromleitschienen angeordnet ist und sich in Längsrichtung eines Abschnitts der beiden Stromleitschienen erstreckt, d. h. in Längsrichtung mit beiden Stromleitschienen überlappt.

In einer Ausführungsform weist das System ein Einspeiseelement auf, das ein erstes Fixiermittel aufweist und das zu den Speisekontakten der Einspeiseeinrichtung korrespondierende Einspeisekontakte aufweist. Bevorzugt weist der elektrische Verbinder ein zu dem ersten Fixiermittel korrespondierendes zweites Fixiermittel auf, wobei erstes und zweites Fixiermittel und Speise- und Einspeisekontakte dergestalt zueinander korrespondierend ausgebildet sind, dass das Einspeiseelement über die zueinander korrespondierenden ersten und zweiten Fixiermittel mit dem elektrischen Verbinder lösbar verbindbar ist unter elektrischer Kontaktierung der Speisekontakte mit den Einspeisekontakten. Alternativ oder ergänzend kann ein zu dem ersten Fixiermittel korrespondierendes drittes Fixiermittel durch zumindest eine der Tragschienen der beiden Leuchtenelemente in der Betriebsposition ausgebildet sein, wobei das dritte Fixiermittel korrespondierend zu dem ersten und insbesondere zu dem zweiten Fixiermittel ausgebildet ist und wobei erstes und drittes Fixiermittel und Speise- und Einspeisekontakte dergestalt zueinander korrespondierend ausgebildet sind, dass das Einspeiseelement über die zueinander korrespondierenden ersten und dritten Fixiermittel mit den Tragschienen in der Betriebsposition lösbar verbindbar ist unter elektrischer Kontaktierung der Speisekontakte mit den Einspeisekontakten. Allgemein bevorzugt weist der elektrische Verbinder, womöglich auch unabhängig von dem Vorsehen einer Einspeiseeinrichtung, ein (zweites) Fixiermittel auf, das mit einem von zumindest einer der Tragschienen ausgebildeten (dritten) Fixiermittel korrespondierend ausgebildet ist, wobei in der Betriebsposition der elektrische Verbinder durch das Zusammenwirken dieser Fixiermittel an den Tragschienen positionsfest gehalten ist. Allgemein ist bevorzugt der elektrische Verbinder in der Betriebsposition unmittelbar an zumindest einen der Tragschienen befestigt. Allgemein ist bevorzugt der elektrische Verbinder ausschließlich durch das Zusammenwirken seiner Fixiermittel mit von einer oder beiden der Tragschienen ausgebildeten Fixiermittel in der Betriebsposition an den Tragschienen befestigt. Durch das Vorsehen eines mit der Einspeiseeinrichtung korrespondierenden Einspeiseelements kann ein Anschluss der Leuchtenelemente in der Betriebsposition an ein externes Leitungsnetz besonders vereinfacht sein. Besonders bevorzugt ist das Einspeiseelement dazu ausgebildet, von der Außenseite des Tragschienenbodens aus auf den Tragschienenboden zubewegt zu werden unter Realisierung eines Eingreifens seines ersten Fixiermittels mit zweitem und/oder drittem Fixiermittel während gleichzeitiger Realisierung einer elektrischen Verbindung zwischen Speise- und Einspeisekontakten. Besonders bevorzugt weist das System zumindest zwei unterschiedliche Einspeiseelemente auf, die jeweils zu den Speisekontakten korrespondierende Einspeisekontakte aufweisen und jeweils zu den zweiten und/oder dritten Fixiermitteln korrespondierende erste Fixiermittel aufweisen. Die Einspeiseelemente weisen bevorzugt externe Anschlusskontakte auf, die mit ihren Einspeisekontakten jeweils elektrisch leitend verbunden sind und über die ein externe Leitung an die Einspeiseelemente angeschlossen und mit den Einspeisekontakten elektrisch leitend verbunden werden kann. Besonders bevorzugt unterscheiden sich die Einspeiseelemente zumindest in ihren ersten Fixiermitteln und/oder in ihrem Verlauf zwischen ihren externen Anschlusskontakten und ihren Einspeisekontakten. Besonders bevorzugt unterscheiden sich die ersten Fixiermittel der beiden unterschiedlichen Einspeiseelemente, wodurch unterschiedliche Fixiermöglichkeiten der Einspeiseelemente an dem elektrischen Verbinder und/oder an zumindest einer der Tragschienen des Systems in seiner Betriebsposition ermöglicht sein können. Besonders bevorzugt weisen die Einspeisekontakte eines ersten der unterschiedlichen Einspeiseelemente einen anderen Winkel zu dessen externen Anschlusskontakten auf als die Speisekontakte eines zweiten der unterschiedlichen Einspeiseelemente zu dessen externen Anschlusskontakten. Mit dem Winkel ist dabei eine Ausrichtung gemeint, über die die jeweiligen Kontakte mit korrespondierenden Kontakten in Verbindung gebracht werden, betreffend die Einspeisekontakte mit Bezug auf die korrespondierenden Speisekontakte, betreffend die externen Anschlusskontakte mit Bezug auf externe Leitungsanschlüsse. Durch das Vorsehen von unterschiedlichen Einspeiseelementen des Systems, die jeweils zu den Speisekontakten korrespondierende Einspeisekontakte aufweisen, sich jedoch in anderen Eigenschaften unterscheiden, ist eine besonders hohe Variabilität des Systems gewährleistet, da je nach Einsatzgebiet und Bedarf auf unterschiedliche Weise eine Kontaktierung des elektrischen Verbinders über seine Einspeiseeinrichtung erfolgen kann. Besonders bevorzugt weist das System unterschiedliche elektrische Verbinder auf, die sich in ihren Einspeiseeinrichtungen unterscheiden, jedoch jeweils zumindest einige der genannten möglichen erfindungsgemäßen Eigenschaften aufweisen. Bevorzugt weisen die unterschiedlichen elektrischen Verbinder beispielsweise jeweils ein zu den Fixiermitteln der mindestens einen Tragschiene korrespondierendes Fixiermittel auf. Beispielsweise unterscheiden sich die Einspeiseeinrichtungen in ihrer vertikalen Erstreckung.

In einer Ausführungsform weist zumindest eine der Tragschienen eine Ausnehmung auf, in der in der Betriebsposition der elektrische Verbinder zumindest abschnittsweise angeordnet ist. Besonders bevorzugt weisen die Tragschienen der beiden Leuchtenelemente jeweils eine solche Ausnehmung auf, dass sie in der Betriebsposition mit ihren Längsenden aneinander angrenzend angeordnet sind unter Ausbildung einer Gesamtausnehmung mittels ihrer beiden Ausnehmungen, wobei der elektrische Verbinder in der Betriebsposition in dieser Gesamtausnehmung angeordnet ist. Besonders bevorzugt liegen die Tragschienen in der Betriebsposition mit ihren Längsenden, an denen die jeweiligen Ausnehmungen vorgesehen sind, unmittelbar aneinander an. Besonders bevorzugt weisen die Tragschienen an jedem ihrer Längsenden eine jeweils analog ausgebildete Ausnehmung auf. Besonders bevorzugt ist durch die Ausnehmungen der Tragschienen in der Betriebsposition eine ununterbrochene Gesamtausnehmung ausgebildet, in der der elektrische Verbinder zumindest abschnittsweise angeordnet ist. Besonders bevorzugt erstreckt sich der elektrische Verbinder vom Innenraum, der vom Tragschienenboden und Tragschienenseitenwänden der Tragschiene umschlossen ist, aus durch die Ausnehmungen bzw. Gesamtausnehmung in der Betriebsposition nach außen, so dass er von außen sehr einfach kontaktierbar ist. Allgemein ist besonders bevorzugt die Ausnehmung bzw. Gesamtausnehmung an dem bzw. den Tragschienenboden bzw. -böden vorgesehen, so dass der Verbinder von der Außenseite des Tragschienenbodens aus kontaktierbar ist, insbesondere aus dem Tragschienenboden in Vertikalrichtung herausragt. Bevorzugt bilden die Ränder der Ausnehmungen das beschriebene Fixiermittel der Tragschienen aus.

In einer Ausführungsform weisen die Stromleitschienen jeweils außerhalb ihrer Mitte, bezogen auf die Transversalrichtung, eine von der Zugangsseite aus zugängliche Codiereinrichtung auf, wobei der elektrische Verbinder eine korrespondierende Codiereinrichtung aufweist. In der Betriebsposition sind Codiereinrichtung und korrespondierende Codiereinrichtung ineinandergreifend angeordnet. Beispielsweise kann die Codiereinrichtung als Ausnehmung ausgebildet sein, und die korrespondierende Codiereinrichtung als Vorsprung oder die korrespondierende Codiereinrichtung als Ausnehmung und die Codiereinrichtung als Vorsprung. Besonders bevorzugt sind Codiereinrichtung und korrespondierende Codiereinrichtung von elektrischem Verbinder dergestalt zueinander korrespondierend ausgebildet und an dem elektrischen Verbinder und der jeweiligen Stromleitschiene angeordnet, dass bei dem elektrischen Verbinden der Leitungsdrähte der Stromleitschiene mit den Anschlusseinrichtungen einer der Gruppen an Anschlusseinrichtungen des elektrischen Verbinders zwingend die zueinander korrespondierenden Codiereinrichtungen miteinander in Eingriff zu bringen sind. Dies bringt den besonderen Vorteil mit sich, dass durch die Codiereinrichtung ein fehlerhafter elektrischer Anschluss des elektrischen Verbinders an die Stromleitschienen nach Möglichkeit ausgeschlossen wird. Besonders bevorzugt weist das System eine wie oben erläuterte Kontakteinrichtung auf, die eine weitere Codiereinrichtung aufweist, die ebenfalls korrespondierend zu der an den Stromleitschienen ausgebildeten Codiereinrichtung ausgebildet ist, wobei die korrespondierende Ausbildung von Codiereinrichtung der Kontakteinrichtung und Codiereinrichtung der Stromleitschiene analog zu der korrespondierenden Ausbildung von Codiereinrichtung des elektrischen Verbinders und Codiereinrichtung der Stromleitschienen vorgesehen sein kann, so dass analog ein fehlerhaftes Kontaktieren der Leitungsdrähte beim Einführen der Kontakte der Kontakteinrichtung in die Kanäle der Stromleitschienen nach Möglichkeit ausgeschlossen ist. Besonders bevorzugt ist die weitere Codiereinrichtung der Kontakteinrichtung ferner zu der korrespondierenden Codiereinrichtung des elektrischen Verbinders korrespondierend ausgebildet, bevorzugt auf dieselbe Weise korrespondierend wie zu der Codiereinrichtung der Stromleitschiene. Hierdurch kann nach Möglichkeit jedwede fehlerhafte Kontaktierung vermieden sein.

Die Erfindung betrifft ferner eine Stromleitschiene, die zur Verwendung in einem erfindungsgemäßen System geeignet ist. Die Stromleitschiene ist in Längsrichtung langgestreckt ausgebildet und weist in einer Transversalrichtung nebeneinander angeordnete und an einer entlang einer Vertikalrichtung ausgebildeten Zugangsseite offene Kanäle auf, die jeweils durch einen Kanalboden und zwei sich entlang der Vertikalrichtung von dem Kanalboden weg zur Zugangsseite hin erstreckende Kanalwände begrenzt sind. Besonders bevorzugt weisen an zumindest einem der Längsenden der Stromleitschiene, bevorzugt an beiden Längsenden der Stromleitschiene, die zwischen zwei benachbarten Kanälen liegenden Kanalwände eine sich ausgehend von dem Längsende über einen Längserstreckungsabschnitt erstreckende Aussparung auf. Die Aussparung kann insbesondere wie mit Bezug auf das erfindungsgemäße System oben beschrieben ausgebildet sein und die oben erläuterten besonderen Vorteile mit sich bringen. Besonders bevorzugt weisen die Kanäle der Stromleitschiene senkrecht zur Längsrichtung einen Querschnitt nach Art eines V auf, der sich ausgehend vom Kanalboden zur Zugangsseite hin weitet. Hierdurch können beispielsweise die Luft- und Kriechstrecken nach Möglichkeit vergrößert sein, und hierdurch kann die Zugänglichkeit für Kontakte einer Kontakteinrichtung besonders begünstigt sein. Besonders bevorzugt weist das durch den V-artigen Querschnitt gebildete V einen Öffnungswinkel zwischen 7° und 30°, insbesondere zwischen 10° und 20°, insbesondere zwischen 13° und 18° auf. Dabei wird auf einen gemittelten Verlauf der Kanalwände senkrecht zur Längsrichtung an ihren zum Kanal, den sie begrenzen, gewandten Seiten abgestellt, insbesondere über eine vertikale Erstreckung hinweg, die in der Betriebsposition ausgehend von dem in dem Kanal angeordneten Leitungsdraht bis zu der Zugangsseite verläuft. Allgemein weisen die Kanäle bzw. Kanalwände bzw. die Stromleitschiene bevorzugt in ihren Erstreckungen bzw. Gestaltungen bzw. Verhältnissen Eigenschaften auf, die oben im Zusammenhang mit dem erfindungsgemäßen System beschrieben sind, wobei gerade bei solchen vorteilhaften Ausführungsformen das Vorsehen eines entsprechenden V-Querschnitts besondere Vorteile mit sich bringen kann, insbesondere mit Bezug auf die Kontaktierbarkeit, Robustheit und/oder Sicherheit gegen ungewolltes Kontaktieren der Leitungsdrähte. Besonders bevorzugt bilden die Kanalwände eines jeden Kanals einen Hinterschnitt aus, wobei jeweils ein Leitungsdraht an dem Kanalboden eines jeden Kanals dergestalt anordenbar ist, dass er durch den Hinterschnitt an einem Austreten aus der Zugangsseite gehindert ist. Besonders bevorzugt ist durch den Hinterschnitt eine, bevorzugt im Querschnitt senkrecht zur Längsrichtung kreisabschnittsförmige, Aufnahme ausgebildet, in der ein Leitungsdraht, insbesondere runder Leitungsdraht, über zumindest 50%, insbesondere zumindest 60%, insbesondere zumindest 70% seines Außenumfangs um seine Längserstreckung herum anliegend in Kontakt mit der Stromleitschiene gehalten ist, wenn er an dem Kanalboden aufliegt. Bei der Verwendung einer erfindungsgemäßen Stromleitschiene zur Realisierung eines erfindungsgemäßen Systems hat der Leitungsdraht diese Position bevorzugt in der Betriebsposition inne. Besonders bevorzugt weist die Stromleitschiene an jedem ihrer Transversalenden einen sich sowohl in Transversalrichtung von der Transversalmitte der Stromleitschiene weg erstreckenden als auch einen sich entlang der Vertikalrichtung zur Zugangsseite hin erstreckenden Haltearm sauf, der sich bevorzugt ununterbrochen über die Längserstreckung der Stromleitschiene hinweg erstreckt. Besonders bevorzugt weist die Stromleitschiene an jedem ihrer Transversalenden jeweils einen Haltesteg auf, der als transversaler Vorsprung ausgebildet ist, an der Zugangsseite der Stromleitschiene angeordnet ist und sich in Transversalrichtung entlang eines transversalen Abschnitts des jeweiligen Haltearms erstreckt, wobei sich Haltearm und Haltesteg an jedem Transversalende in Vertikalrichtung zumindest abschnittsweise gegenüberliegen und in Vertikalrichtung bevorzugt voneinander beabstandet sind. Durch das Vorsehen von Haltesteg und/oder Haltearm an dem bzw. den Transversalenden der Stromleitschiene kann eine Halterung der Stromleitschiene an einem Montagekörper besonders begünstigt sein. Besonders bevorzugt weist die Stromleitschiene Leitungsdrähte auf, die in ihren Kanälen angeordnet sind, wobei sich die Leitungsdrähte an zumindest einem, insbesondere an beiden Längsenden der Stromleitschiene mit einem freien Längsabschnitt in Längsrichtung über die Kanäle hinaus erstrecken, indem sie frei zugänglich sind, ohne dass Kanalwand bzw. -boden die Zugänglichkeit behindern. Dies ist für eine Verbindung der Leitungsdrähte mit dem elektrischen Verbinder des Systems besonders vorteilhaft. Besonders bevorzugt erstreckt sich die Aussparung, die in der jeweiligen Kanalwand vorgesehen ist, über mindestens 30%, insbesondere mindestens 50% in Transversalrichtung über die transversale Erstreckung der jeweiligen Kanalwand hinweg. Dies kann das Einführen eines ausreichend dicken und somit hinreichend starren Abschnitts, insbesondere einer Trennwand, des elektrischen Verbinders besonders begünstigen, was das Zusammenführen von Stromleitschiene und elektrischem Verbinder besonders begünstigen kann. Allgemein weist hierzu die Aussparung, die in einer Kanalwand, die zwei benachbarte Kanäle miteinander verbindet, vorgesehen ist, eine solche maximale transversale Erstreckung auf, die mindestens 20%, insbesondere mindestens 30% des Abstands zwischen den transversalen Mitten der beiden benachbarten Kanäle auf vertikaler Höhe ihrer Kanalböden beträgt. Besonders bevorzugt gilt dies auch für die minimale transversale Erstreckung der Ausnehmung. Dabei bezieht sich die Angabe der maximalen und minimalen transversalen Erstreckung auf die Erstreckung der Ausnehmung entlang der Vertikalrichtung in einem Längsabschnitt der Ausnehmung, der an dem Längsende der Stromleitschiene ist, von dem aus die Ausnehmung zugänglich ist. Besonders bevorzugt weist die Stromleitschiene eine Codiereinrichtung auf, die bevorzugt außerhalb der Transversalmitte der Stromleitschiene angeordnet ist und die zu einer Codiereinrichtung eines elektrischen Verbinders und/oder zu einer Codiereinrichtung einer Kontakteinrichtung wie oben erläutert korrespondierend ausgestaltet sein kann. Bevorzugt ist die Codiereinrichtung als codierend, d. h. positionsfestlegend, mit Bezug auf ein Zusammenstecken mit einem elektrischen Verbinder in Längsrichtung und als codierend mit Bezug auf ein Zusammenstecken mit einer Kontakteinrichtung in Vertikalrichtung ausgebildet. Dies kann beispielsweise durch das Vorsehen einer einzigen Nut, eines einzigen Vorsprungs oder durch eine Nut-Vorsprung-Kombination gewährleistet sein. Codierend bedeutet dabei, dass sie die Relativposition festlegt, in der die Stromleitschiene mit dem elektrischen Verbinder in Längsrichtung bzw. mit der Kontakteinrichtung ineinandersteckbar ist unter Gewährleistung einer elektrisch leitenden Verbindung zwischen den Leitungsdrähten und dem elektrischen Verbinder bzw. der Kontakteinrichtung.

Die Erfindung betrifft ferner ein Verfahren zur Realisierung einer Leuchtenanordnung mittels eines erfindungsgemäßen Systems. Bei dem erfindungsgemäßen Verfahren werden zwei in Längsrichtung langgestreckte Leuchtenelemente miteinander verbunden, die jeweils eine in Längsrichtung langgestreckte Tragschiene aufweisen, an der jeweils eine in Längsrichtung langgestreckte Stromleitschiene fixiert ist, die jeweils eine Mehrzahl an entlang der Längsrichtung verlaufenden, entlang einer Transversalrichtung nebeneinander angeordneten und an einer entlang einer Vertikalrichtung ausgebildeten Zugangsseite offenen Kanäle aufweist, wobei in den Kanälen Leitungsdrähte angeordnet sind, indem ein elektrischer Verbinder zwischen den Leuchtenelementen angeordnet wird, der eine erste und eine zweite Gruppe an Anschlusseinrichtungen umfasst, wobei die erste Gruppe an Anschlusseinrichtungen von der zweiten Gruppe an Anschlusseinrichtungen in Längsrichtung beabstandet ist und wobei jede Anschlusseinrichtung der ersten Gruppe mit genau einer Anschlusseinrichtung der zweiten Gruppe über jeweils eine Verbindungseinrichtung elektrisch leitend verbunden ist, wobei die Leitungsdrähte eines ersten der beiden Leuchtenelemente an jeweils einer Anschlusseinrichtung der ersten Gruppe an Anschlusseinrichtungen angeschlossen werden und die Leitungsdrähte eines zweiten der Leuchtenelemente an jeweils einer Anschlusseinrichtung der zweiten Gruppe an Anschlusseinrichtungen angeschlossen werden, wobei ein Montagekörper, an dessen einer Seite, bezogen auf die Vertikalrichtung, eine Kontakteinrichtung angeordnet ist, mit einer Bewegung entlang der Vertikalrichtung auf die Tragschiene von einem der Leuchtenelemente zu bewegt wird und während dieser Bewegung die Kontakteinrichtung in elektrischen Kontakt mit den Leitungsdrähten der Stromleitschiene des Leuchtenelements gebracht wird, während sich die Kontakteinrichtung in einer beliebigen Längsposition innerhalb der Längserstreckung der Tragschiene entlang der Stromleitschiene befindet. Die Leitungsdrähte des zweiten Leuchtenelements werden an die zweite Gruppe an Anschlusseinrichtungen angeschlossen, indem das zweite Leuchtenelement, bei dem an zumindest einem Längsende die Leitungsdrähte in Längsrichtung über die Kanäle seiner Stromleitschiene überstehen, mit diesem Längsende auf den elektrischen Verbinder entlang der Längsrichtung bis zu einer Betriebsposition zugeschoben wird, in der die Leitungsdrähte des zweiten Leuchtenelements in elektrischem Kontakt mit den jeweils zugeordneten der zweiten Gruppe an Anschlusseinrichtungen stehen und die Stromleitschiene mit dem elektrischen Verbinder entlang der Längsrichtung überlappt. Dabei wird bevorzugt zuerst der elektrische Verbinder mit seiner ersten Gruppe an Anschlusseinrichtungen an die Leitungsdrähte des ersten Leuchtenelements angeschlossen, bevor das zweite Leuchtenelement auf das erste Leuchtenelement in Längsrichtung zubewegt wird und wie erläutert seine Leitungsdrähte an den elektrischen Verbinder angeschlossen werden zum Erreichen der oben erläuterten Betriebsposition des erfindungsgemäßen Systems. Bevorzugt werden die Tragschienen außerdem mechanisch aneinander positionsfest fixiert, bevorzugt nach Verbinden der Leitungsdrähte beider Leuchtenelemente mit dem elektrischen Verbinder. Besonders bevorzugt wird bei dem Verfahren nach Realisierung der Betriebsposition der Bestandteile des erfindungsgemäßen Systems zueinander ein in Längsrichtung langgestreckter Montagekörper, an dessen einer Vertikalseite eine Kontakteinrichtung angeordnet ist, mit einer Bewegung entlang der Vertikalrichtung auf eine der Tragschienen zubewegt, bis er an der Tragschiene anliegt, wobei während dieser Bewegung Kontakte der Kontakteinrichtung mit den über den elektrischen Verbinder verbundenen Leitungsdrähten beider Stromleitschienen in Kontakt gebracht werden, indem die Kontakte, je nach Längsposition des Montagekörpers und seiner Kontakteinrichtung relativ zu den Tragschienen, die Kontakte der Kontakteinrichtung unmittelbar an den Leitungsdrähten einer der Stromleitschienen anliegen oder an einer der Gruppe an Anschlusseinrichtungen oder den Verbindungseinrichtungen des Verbinders unmittelbar anliegen.

Das erfindungsgemäße System, die erfindungsgemäße Stromleitschiene und das erfindungsgemäße Verfahren können jeweils Merkmale aufweisen, die im Zusammenhang mit gattungsgemäßen Systemen erläutert sind und können in verschiedenen vorteilhaften Ausführungsformen jeweils zu einer anderen erfindungsgemäßen Lösung beschriebene vorteilhafte Merkmale aufweisen.

Die Erfindung wird nachfolgend unter Bezugnahme auf fünf Figuren anhand eines Ausführungsbeispiel näher erläutert.

Es zeigen:
- Figur 1:: in verschiedenen Prinzipdarstellungen verschiedene Ansichten auf verschiedene Bestandteile des erfindungsgemäßen Systems in der Betriebsposition;
- Figur 2:: in einer Prinzipdarstellung eine Ansicht auf Bestandteile der Ausführungsform gemäß Figur 1 in der Betriebsposition;
- Figur 3:: in einer schematischen Prinzipdarstellung eine Ansicht auf eines der Einspeiseelemente der Ausführungsform gemäß Figur 1;
- Figur 4:: in verschiedenen schematischen Prinzipdarstellungen verschiedene Ansichten auf einen elektrischen Verbinder der Ausführungsform gemäß Figur 1;
- Figur 5:: in einer schematischen Prinzipdarstellung eine Ansicht auf eine Stromleitschiene der Ausführungsform gemäß Figur 1.

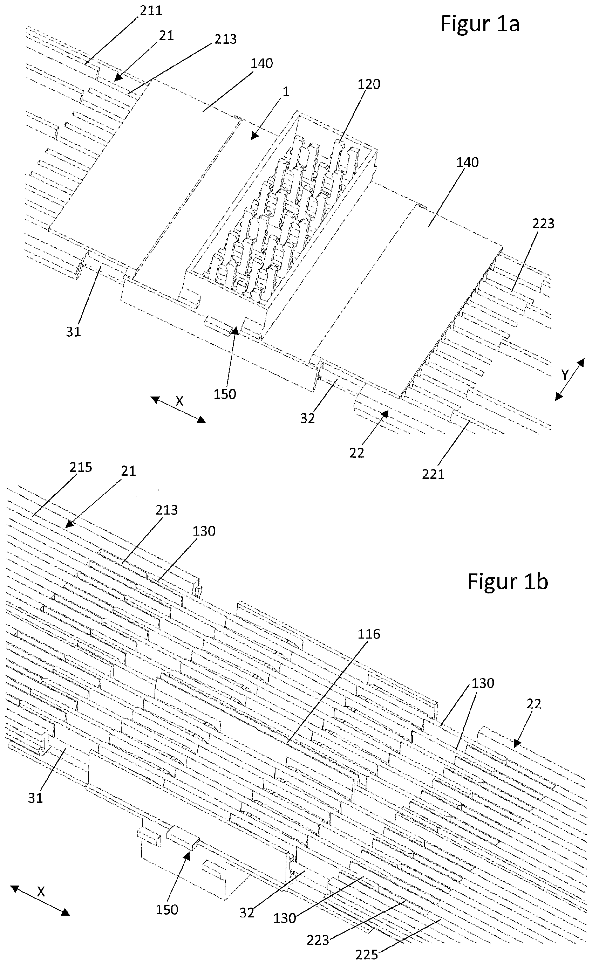

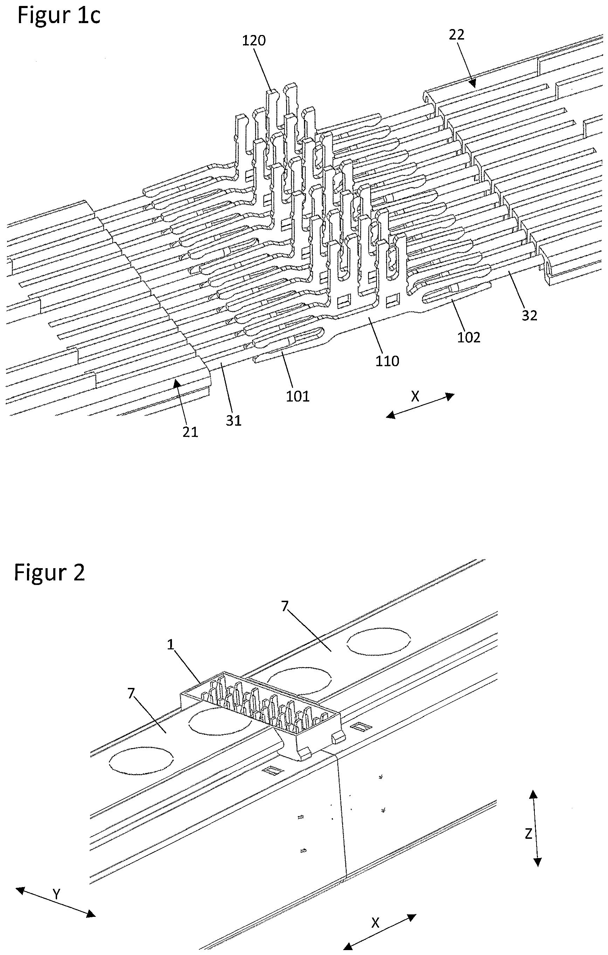

In Figur 1 umfassend die Figuren 1a, 1b und 1c sind in verschiedenen Prinzipdarstellungen verschiedene Bestandteile einer Ausführungsform eines erfindungsgemäßen Systems in verschiedenen Ansichten dargestellt. Die Bestandteile des erfindungsgemäßen Systems befinden sich dabei in der Betriebsposition des Systems, d. h. in einer definierten Anordnung zueinander. Das erfindungsgemäße System umfasst eine erste Stromleitschiene 21 und eine zweite Stromleitschiene 22 sowie einen elektrischen Verbinder 1. Die Stromleitschienen 21, 22 weisen jeweils eine Mehrzahl an Kanälen auf, die in Transversalrichtung Y nebeneinander angeordnet sind, wobei jeweils zwei in Transversalrichtung Y nebeneinander angeordnete Kanäle durch eine zwischen ihnen ausgebildete Kanalwand 215, 225 voneinander getrennt sind. In Figur 1b ist eine Ansicht auf die Zugangsseite der Stromleitschienen 21, 22 dargestellt, in den Figuren 1a und 1c ein Blick auf die der Zugangsseite in Vertikalrichtung Z gegenüberliegende Seite dargestellt. In jedem der Kanäle ist jeweils ein Leitungsdraht 31, 32 angeordnet, wobei sich die Leitungsdrähte 31, 32 an dem dargestellten Längsende der jeweiligen Stromleitschiene 21, 22 in Längsrichtung X über die jeweiligen Längsenden der Kanalwände 215, 225 hinweg erstrecken, was erfindungsgemäß allgemein vorteilhaft ist. Dabei sind in der Betriebsposition die Leitungsdrähte 31, 32 an ihren Längsenden jeweils in einer der Anschlusseinrichtungen 101, 102 des elektrischen Verbinders 1 angeordnet und stehen mit dieser in elektrisch leitender Verbindung, wie insbesondere aus Figur 1c ersichtlich ist. Der Verbinder 1 der vorliegend beschriebenen Ausführungsform weist eine erste Gruppe an Anschlusseinrichtungen 101 und eine zweite Gruppe an Anschlusseinrichtungen 102 auf. Jede Anschlusseinrichtung 101 der ersten Gruppe an Anschlusseinrichtungen ist über jeweils eine Verbindungseinrichtung 110 mit einer der Anschlusseinrichtungen 102 der zweiten Gruppe an Anschlusseinrichtungen elektrisch leitend, vorliegend einstückig verbunden. Vorliegend ist jeweils eine der Anschlusseinrichtungen 101 der ersten Gruppe, eine der Verbindungseinrichtungen 110 und eine der Anschlusseinrichtungen 102 der zweiten Gruppe an Anschlusseinrichtungen als einstückige stromleitende Einheit, die aus einem Metall hergestellt ist, ausgebildet. Diese stromleitenden Einheiten sind in einem Verbindergehäuse zueinander isoliert und positionsfest gehalten. Zur Veranschaulichung ist in Figur 1c der elektrische Verbinder 1 ohne sein Verbindergehäuse dargestellt, damit das Ineinandergreifen von Leitungsdrähten 31, 32 und Anschlusseinrichtungen 101, 102 besonders gut ersichtlich ist. Ferner ist aus der Zusammenschau von Figur 1c und 1a ersichtlich, dass der elektrische Verbinder 1 eine Einspeiseeinrichtung mit Speisekontakten 120 aufweist, die sich ausgehend von den Verbindungseinrichtungen 110 in Vertikalrichtung Z weg erstrecken und über die eine Einspeisung von außen über ein zugeordnetes und korrespondierendes Einspeiseelement des Systems ermöglicht ist.

Aus der Zusammenschau der Figuren 1a, 1b und 1c ist ersichtlich, dass die Leitungsdrähte 31, 32 in den ihnen zugeordneten Anschlusseinrichtungen 101, 102 dergestalt gelagert sind und mit diesen Anschlusseinrichtungen 101, 102 elektrisch leitend verbunden sind, dass ausgehend von der Betriebsposition die Leitungsdrähte 31, 32 relativ zu den Anschlusseinrichtungen 101, 102 sowohl in positiver als auch in negativer Richtung entlang der Längsrichtung X verschiebbar sind unter Aufrechterhaltung des elektrisch leitenden Kontakts zwischen Anschlusseinrichtung 101, 102 und jeweiligem Leitungsdraht 31, 32. Dies ist erfindungsgemäß allgemein vorteilhaft. Bei der gezeigten Ausführungsform ist dies durch die Realisierung der Anschlusseinrichtung 101, 102 nach Art eines Gabelkontakts gewährleistet. Allgemein sind auch andere Realisierungsmöglichkeiten denkbar, beispielsweise zylindrische Aufnahmemöglichkeiten, bei denen ein entsprechender, erfindungsgemäß allgemein besonders vorteilhafter elektrisch leitender Gleitkontakt zwischen Leitungsdraht 31, 32 und Anschlusseinrichtung 101, 102 gewährleistet ist und eine Zugänglichkeit der Anschlusseinrichtung 101, 102 in Längsrichtung X.

In den Figuren 1a und 1b ist insbesondere weiterhin zu erkennen, dass die Stromleitschienen 21, 22 Aussparungen 213, 223 aufweisen, die jeweils in Kanalwänden 215, 225 vorgesehen sind, die sich zwischen zwei Kanälen der Stromleitschienen 21, 22 erstrecken. Diese Aussparungen sind von dem Längsende der Stromleitschienen 21, 22 aus zugänglich und somit zum Längsende der Stromleitschiene 21, 22 hin offen, was erfindungsgemäß allgemein vorteilhaft ist. In der in den Figuren 1a und 1b dargestellten Betriebsposition erstreckt sich der elektrische Verbinder 1 mit Trennwänden 130 in die jeweiligen Aussparungen 213, 223. Hierdurch ist sowohl eine besonders gute Stabilität als auch eine Vergrößerung der Luft- und Kriechstrecken gewährleistet. Dies ermöglicht das Anordnen von besonders vielen Leitungsdrähten 31, 32 in Transversalrichtung Y nebeneinander innerhalb eines möglichst geringen Längserstreckungsbereichs der Stromleitschienen 21, 22 entlang der Transversalrichtung Y. Wie aus insbesondere Figur 1a und Figur 1b ersichtlich und erfindungsgemäß allgemein vorteilhaft, überlappen sich der elektrische Verbinder 1 und die Stromleitschienen 21, 22 in der Betriebsposition dergestalt, dass sie ausgehend von der Betriebsposition sowohl in positive als auch in negative Richtung entlang der Längsrichtung X relativ zueinander beweglich sind unter Aufrechterhaltung der Überlappung. Dabei überlappen sie sich in der Betriebsposition im vorliegenden Ausführungsbeispiel und erfindungsgemäß allgemein vorteilhaft entlang der Längsrichtung X über mehr als 5 mm. Bei der beschriebenen Ausführungsform wird die Überlappung dadurch gewährleistet, dass der elektrische Verbinder 1 mit seinen Trennwänden 130 in die Aussparungen 213, 223 eingreift und sich darüber hinaus mit seiner Schutzplatte 140, die vorliegend zwei Schutzplattenabschnitte umfasst, in Längsrichtung X an der der Zugangsseite gegenüberliegenden Vertikalseite der Stromleitschienen 21, 22 entlang diesen Stromleitschienen 21, 22 in Längsrichtung X erstreckt.

Bei dem beschriebenen Ausführungsbeispiel sind an der der Zugangsseite abgewandten Seite der Kanalböden der Stromleitschienen 21, 22 ferner Abstandsstege 211, 221 vorgesehen, die sich ausgehend von den Kanalböden in Vertikalrichtung Z von der Zugangsseite weg erstrecken. Diese Abstandsstege 211, 221 sind für eine elektrische Isolierung gegenüber dem Tragschienenabschnitt, an dem die Stromleitschienen 21, 22 in der Betriebsposition befestigt sind, besonders vorteilhaft. Darüber hinaus ermöglichen diese Abstandsstege 211, 221 ein einfaches Einschieben des elektrischen Verbinders 1 mit den Schutzplattenabschnitten seiner Schutzplatte 140 zwischen Tragschiene und Stromleitschiene 21, 22 zum Erreichen der Betriebsposition. Dabei sind die Abstandsstege 211, 221 von den Längsenden der Stromleitschienen 21, 22 beabstandet, bevorzugt um mehr als 5 mm, bevorzugt mehr als 10 mm beabstandet. Bevorzugt sind die Abstandsstege 211, 221 nur außerhalb des Längserstreckungsbereichs der Ausnehmungen 213, 223 angeordnet. Das Vorsehen von Abstandsstegen 211, 221, insbesondere mit einer vertikalen Erstreckung von mindestens 1 mm, insbesondere mindestens 2 mm, ist erfindungsgemäß allgemein besonders vorteilhaft.

Wie aus Figur 1 ersichtlich weist der elektrische Verbinder 1 ferner ein Fixiermittel 150 auf, das korrespondierend zu von den Tragschienen 7 der vorliegenden Ausführungsform eines erfindungsgemäßen Systems ausgebildeten Fixiermitteln 150, die vorliegend durch die Umrandung der Ausnehmung gegeben sind, ausgebildet ist, wie insbesondere aus Figur 2 ersichtlich. Über dieses Fixiermittel 150 ist der elektrische Verbinder 1 in der Betriebsposition relativ zu den Tragschienen 7 der beiden Leuchtenelemente positionsfest fixierbar. Das Vorsehen eines solchen Fixiermittels 150 ist erfindungsgemäß allgemein besonders vorteilhaft. Wie aus Figur 2 zu erkennen, weisen die Tragschienen 7 an ihren Längsenden jeweils eine Ausnehmung auf, wobei sie in der Betriebsposition dergestalt nebeneinander angeordnet sind, dass ihre Ausnehmungen eine gemeinsame Gesamtausnehmung bilden, in der der elektrische Verbinder 1 mit einem Abschnitt angeordnet ist, wobei sich der elektrische Verbinder 1 mit seinen Speisekontakten 120 an der von dem Innenraum weggewandten Seite der Tragschienenböden der Tragschienen 7 erstreckt, so dass der elektrische Verbinder 1 von außerhalb der Tragschienen 7 ausgehend von deren Tragschienenböden besonders einfach zugänglich ist.

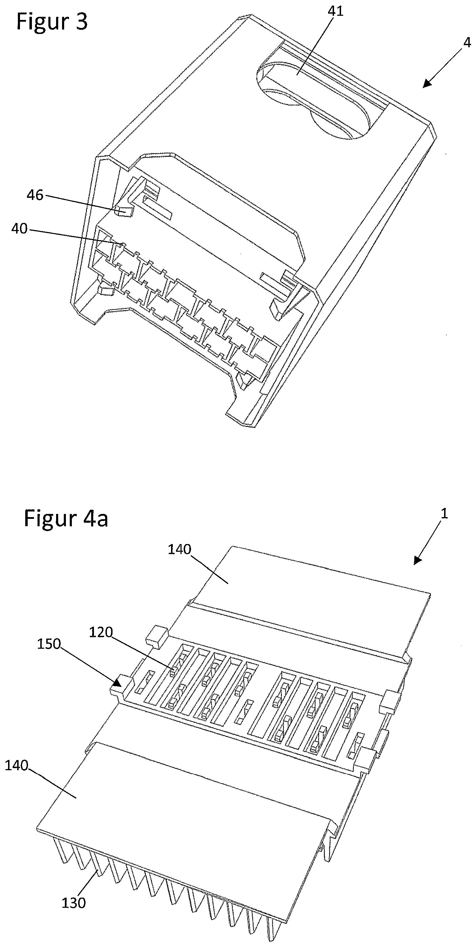

In Figur 3 ist ein Einspeiseelement 4 der beschriebenen Ausführungsform des erfindungsgemäßen Systems dargestellt. Das Einspeiseelement 4 weist ein erstes Fixiermittel 46 auf, das korrespondierend zu dem Fixiermittel 150 ausgebildet ist, das bei dem elektrischen Verbinder 1 gemäß Figur 1 vorgesehen ist und über das das Einspeiseelement 4 mit dem elektrischen Verbinder 1 mechanisch positionsfest fixierbar ist unter Kontaktierung seiner Einspeisekontakte 40 mit den Speisekontakten 120 des elektrischen Verbinders 1. Das Einspeiseelement 4 weist ferner eine Öffnung 41 auf, in der externe Anschlusskontakte vorgesehen sind, die in Kontakt mit externen Leitungen gebracht werden können zum einfachen Einspeisen bzw. Verbinden eines externen Leitungsnetzes mit den Leitungsdrähten 31, 32.

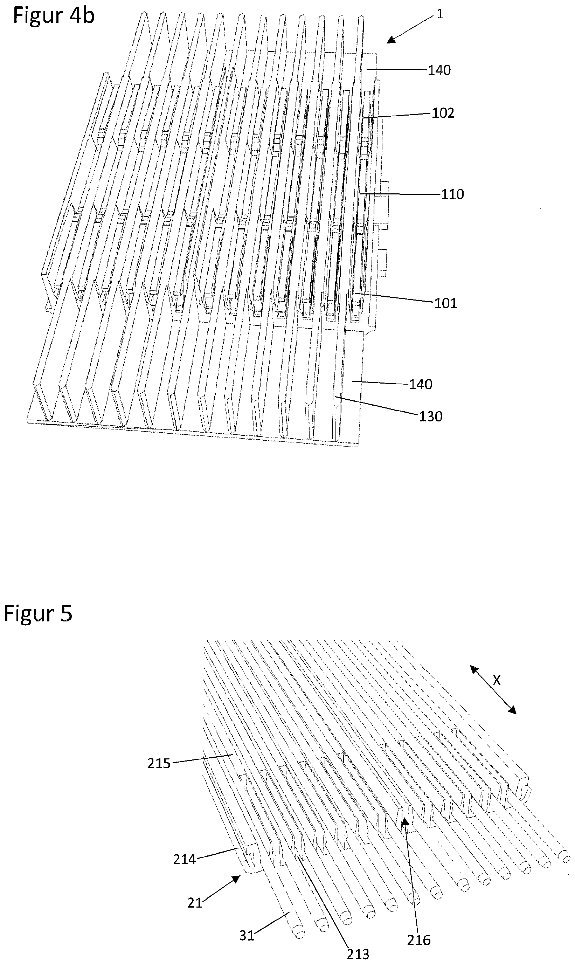

In Figur 4 umfassend Figuren 4a und 4b ist ein weiterer elektrischer Verbinder 1 der beschriebenen Ausführungsform des erfindungsgemäßen Systems dargestellt. Dieser elektrische Verbinder 1 weist analog zu dem in Figur 1 dargestellten elektrischen Verbinder 1 eine Schutzplatte 140 mit Schutzplattenabschnitten, Trennwände 130, Anschlusseinrichtungen 101, 102 und Verbindungseinrichtungen 110 auf. Allerdings weist dieser elektrische Verbinder 1 anders ausgestaltete Speisekontakte 120 auf und ist korrespondierend zu einem anderen Einspeiseelement ausgebildet, weist jedoch ein analoges zweites Fixiermittel 150 auf.

In Figur 5 ist eine Stromleitschiene 21 der beschriebenen Ausführungsform des erfindungsgemäßen Systems dargestellt. In jedem der Kanäle der Stromleitschiene 21 ist jeweils ein Leitungsdraht 31 angeordnet. Aus Figur 5 ist zu erkennen, dass die Kanäle einen Querschnitt senkrecht zur Längsrichtung X aufweisen, der nach Art eines V ausgebildet ist, wobei die Kanalwände einen Hinterschnitt ausbilden, durch die eine sichere Positionierung der Leitungsdrähte 31 in den Kanälen gewährleistet ist. Ferner ist ersichtlich, dass die Kanalwände 215, die zwischen zwei Kanälen angeordnet sind, jeweils eine Aussparung 213 aufweisen. Aus Figur 5 ist ferner ersichtlich, dass die Stromleitschiene 21 eine Codiereinrichtung 216 aufweist. Wie aus Figur 1b zu erkennen weist der elektrische Verbinder 1 eine korrespondierende Codiereinrichtung 116 auf. Vorliegend sind Codiereinrichtung 216 und korrespondierende Codiereinrichtung 116 jeweils als sich in Vertikalrichtung Z erstreckender Vorsprung ausgebildet, wobei darüber hinaus die Codiereinrichtung 216 als Ausnehmung ausgebildet ist, die sich in Längsrichtung X erstreckt, und die korrespondierende Codiereinrichtung 116 als Vorsprung ausgebildet ist, die sich ebenfalls in Längsrichtung X erstreckt. Durch das Vorsehen von Codiereinrichtung 216 und korrespondierender Codiereinrichtung 116, die jeweils außerhalb der transversalen Mitte von elektrischem Verbinder 1 und Stromleitschiene 21 angeordnet sind, ist sichergestellt, dass Stromleitschiene 21 und elektrischer Verbinder 1 nur in einer Art und Weise ineinander gesteckt werden können. Darüber hinaus ist dadurch, dass sie als vertikaler Vorsprung ausgebildet sind, sichergestellt, dass die Codiereinrichtungen 116, 216 gleichzeitig eine zuverlässig richtige Kontierung durch eine Kontakteinrichtung aufweisen, die eine Codiereinrichtung aufweist, die sowohl zu der Codiereinrichtung 216 als auch zu der korrespondierenden Codiereinrichtung 116 korrespondierend ausgebildet ist. Allgemein ist erfindungsgemäß besonders vorteilhaft, dass an der Stromleitschiene eine Codiereinrichtung vorgesehen ist, die außerhalb der transversalen Mitte der Stromleitschiene 21 vorgesehen ist, und die sowohl mit Bezug auf eine vertikale Kontaktbewegung der Stromleitschiene 21 zu einer Kontakteinrichtung hin als auch mit Bezug auf eine Längsbewegung der Stromleitschiene 21 auf den elektrischen Verbinder 1 hin eine Codierung gewährleistet, indem bei dem elektrischen Verbinden der Leitungsdrähte 31, 32 der Stromleitschiene 21 mit den Anschlusseinrichtungen 101, 102 des elektrischen Verbinders 1 durch die Längsverschiebung relativ zum elektrischen Verbinder zwingend die korrespondierenden Codiereinrichtungen 116 von Stromleitschiene 21 und elektrischem Verbinder 1 miteinander in Eingriff gebracht werden müssen und bei einem elektrischen Verbinden der Leitungsdrähte 31, 32 der Stromleitschiene 21 mit den Kontakten der Kontakteinrichtung durch die Vertikalbewegung zwischen Stromleitschiene 21 und Kontakteinrichtung zwingend die zueinander korrespondierenden Codiereinrichtungen 116 von Stromleitschiene 21 und Kontakteinrichtung miteinander in Eingriff zu bringen sind.

### Bezugszeichenliste

- 1: elektrischer Verbinder
- 4: Einspeiseelement
- 7: Tragschiene
- 21: erste Stromleitschiene
- 22: zweite Stromleitschiene
- 31 ': Leitungsdraht
- 32: Leitungsdraht
- 40: Einspeisekontakt
- 41: Öffnung
- 46: erstes Fixiermittel
- 101: erste Gruppe an Anschlusseinrichtungen
- 102: zweite Gruppe an Anschlusseinrichtungen
- 110: Verbindungseinrichtung
- 116: korrespondierende Codiereinrichtung
- 120: Speisekontakt
- 130: Trennwand
- 140: Schutzplatte
- 150: zweites Fixiermittel
- 211: Abstandsteg
- 213: Aussparung
- 215: Kanalwand
- 216: Codiereinrichtung
- 221: Abstandsteg
- 223: Aussparung
- 225: Kanalwand
- X: Längsrichtung
- Y: Transversalrichtung
- Z: Vertikalrichtung

## Patentansprüche

1. System zur Realisierung einer in einer Längsrichtung (X) langgestreckten Leuchte, das System umfassend mehrere in Längsrichtung (X) langgestreckte Tragschienen (7), mehrere in Längsrichtung (X) langgestreckte Stromleitschienen (21, 22) und mehrere in Längsrichtung (X) verlaufende Leitungsdrähte (31, 32), wobei die Tragschienen (7) jeweils einen Querschnitt senkrecht zur Längsrichtung (X) aufweisen, der entlang einer Vertikalrichtung an einem vertikalen Ende offen ist und entlang einer Querrichtung durch zwei Tragschienenseitenwände begrenzt ist, die durch einen entlang der Querrichtung verlaufenden Tragschienenboden miteinander verbunden sind und die sich von dem Tragschienenboden vertikal weg erstrecken, wobei die Stromleitschienen (21, 22) jeweils eine Mehrzahl an entlang der Längsrichtung (X) verlaufenden, entlang einer Transversalrichtung (Y) nebeneinander angeordneten und an einer entlang der Vertikalrichtung (Z) ausgebildeten Zugangsseite offenen Kanäle aufweisen, wobei jeder der Stromleitschienen (21, 22) jeweils eine Gruppe an Leitungsdrähten (31, 32) zugeordnet ist, von denen jeder in jeweils einem der Kanäle der Stromleitschienen (21, 22) angeordnet ist, wobei in einer Betriebsposition eine erste der Stromleitschienen (21), in deren Kanäle eine erste Gruppe an Leitungsdrähten (31) angeordnet sind, an einer ersten der Tragschienen (7) fixiert ist unter Ausbildung eines ersten Leuchtenelements und eine zweite der Stromleitschienen (22), in deren Kanäle eine zweite Gruppe an Leitungsdrähten (32) angeordnet sind, an einer zweiten der Tragschienen (7) fixiert ist unter Ausbildung eines zweiten Leuchtenelement, wobei die Leuchtenelemente in der Betriebsposition in Längsrichtung (X) nebeneinander angeordnet sind und die Tragschienen (7) mechanisch aneinander fixiert sind und die Leitungsdrähte (31, 32) der ersten und zweiten Gruppe miteinander elektrisch leitend verbunden sind, wobei das System zumindest einen in Längsrichtung (X) langgestreckten Montagekörper umfasst, an dessen einer Seite, bezogen auf die Vertikalrichtung (Z), eine Kontakteinrichtung angeordnet ist, wobei das System einen sich in Längsrichtung (X) erstreckenden elektrischen Verbinder (1) umfasst, der eine erste und eine zweite Gruppe an Anschlusseinrichtungen (101, 102) umfasst, wobei die erste Gruppe an Anschlusseinrichtungen (101) von der zweiten Gruppe an Anschlusseinrichtungen (102) in Längsrichtung (X) beabstandet ist und wobei jede Anschlusseinrichtung der ersten Gruppe (101) mit genau einer Anschlusseinrichtung der zweiten Gruppe (102) über jeweils eine Verbindungseinrichtung (110) elektrisch leitend verbunden ist, wobei in der Betriebsposition jeder der ersten Gruppe an Leitungsdrähten (31) an jeweils einer der ersten Gruppe an Anschlusseinrichtungen (101) angeschlossen ist und jeder der zweiten Gruppe an Leitungsdrähten (32) an jeweils einer der zweiten Gruppe an Anschlusseinrichtungen (102) angeschlossen ist, wobei in der Betriebsposition die Verbindungseinrichtungen (110) in von dem elektrischen Verbinder (1) ausgebildeten Kanälen geführt sind und zwischen den durch sie verbundenen Anschlusseinrichtungen von der Zugangsseite aus zugänglich sind, **dadurch gekennzeichnet dass** der Montagekörper mit einer Bewegung entlang der Vertikalrichtung (Z) auf eine der Tragschienen (7) zu bewegbar ist, an der eine der Stromleitschienen (21, 22) fixiert ist, die an den elektrischen Verbinder (1) angeschlossen ist, bis er an dem offenen vertikalen Ende der Tragschiene (7) anliegt, so dass der Montagekörper gemeinsam mit der Tragschiene (7) einen Innenraum ausbildet, der durch Tragschiene (7) und Montagekörper senkrecht zur Längsrichtung (X) umlaufend umschlossen ist, und über ein Befestigungsmittel an der Tragschiene (7) fixierbar ist, wobei die Kontakteinrichtung dazu ausgebildet, in einer beliebigen Längsposition innerhalb der Längserstreckung der Tragschiene (7) entlang der Stromleitschiene (21, 22) während der genannten Bewegung in elektrischen Kontakt mit den Leitungsdrähten der Stromleitschiene (21, 22) gebracht zu werden.

2. System nach Anspruch 1,
**dadurch gekennzeichnet, dass**
in der Betriebsposition jeweils einer der von dem elektrischen Verbinder (1) ausgebildeten Kanäle einen der Kanäle der ersten Stromleitschiene (21) mit einem der Kanäle der zweiten Stromleitschiene (22) durchgehend verbindet.

3. System nach einem der vorangehenden Ansprüche,
**dadurch gekennzeichnet, dass**
in der Betriebsposition Kanalwände (215, 225) des elektrischen Verbinders (1) und Kanalwände (215, 225) der Stromleitschiene (21, 22) kammartig ineinandergreifen, wobei insbesondere der elektrische Verbinder (1) mit seinen Kanalwänden (215, 225) die genannten Kanalwände (215, 225) der Stromleitschiene (21, 22) umgreift.

4. System nach einem der vorangehenden Ansprüche,
**dadurch gekennzeichnet, dass**
durch jeweils einen der Leitungsdrähte (31, 32) der ersten Gruppe an Leitungsdrähten (31), jeweils eine der Anschlusseinrichtungen der ersten Gruppe (101) an Anschlusseinrichtungen, jeweils eine der Verbindungseinrichtungen (110), jeweils eine der Anschlusseinrichtungen der zweiten Gruppe (102) an Anschlusseinrichtungen und jeweils einen der Leitungsdrähte (32) der zweiten Gruppe an Leitungsdrähten in der Betriebsposition jeweils ein von der Zugangsseite aus entlang der Längsrichtung (X) durchgehend kontaktierbarer elektrischer Leiter (1) ausgebildet ist.

5. System nach einem der vorangehenden Ansprüche,
**dadurch gekennzeichnet, dass**
zumindest eine Mehrheit der Anschlusseinrichtungen als in einer Längsrichtung (X) offene Kontakte, insbesondere Gabelkontakte, ausgebildet sind, wobei der elektrische Verbinder (1) dergestalt korrespondierend zu den Stromleitschienen (21, 22) ausgebildet ist, dass die in einer der Stromleitschienen (21, 22) angeordneten Leitungsdrähte (31, 32) elektrisch leitend mit einer der Gruppen an Anschlusseinrichtungen (101, 102) verbindbar sind, indem die Stromleitschiene (21, 22) entlang der Längsrichtung (X) auf den elektrischen Verbinder (1) zubewegt wird unter Einführung eines jeden ihrer sämtlichen Leitungsdrähte (31, 32) in jeweils einen der durch die Gruppe an Anschlusseinrichtungen (101, 102) ausgebildeten Kontakte.

6. System nach einem der vorangehenden Ansprüche,
**dadurch gekennzeichnet, dass**
jeweils eine Anschlusseinrichtungen der ersten Gruppe an Anschlusseinrichtungen (101), eine der Anschlusseinrichtungen der zweiten Gruppe an Anschlusseinrichtungen (102) und eine der Verbindungseinrichtungen (110) miteinander verbunden sind unter Ausbildung einer in Längsrichtung (X) durchgehenden, stromleitenden Einheit, wobei die unterschiedlichen stromleitenden Einheiten in Transversalrichtung (Y) nebeneinander angeordnet sind und im dem Betriebszustand jede stromleitende Einheit an einen der ersten Gruppe an Leitungsdrähten (31) und an einen der zweiten Gruppe an Leitungsdrähten (32) angeschlossen ist.

7. System nach Anspruch 6,
**dadurch gekennzeichnet, dass**
der elektrische Verbinder (1) ein Verbindergehäuse aufweist, in dem die stromleitenden Einheiten positionsfest und zueinander isoliert aufgenommen sind.

8. System nach einem der vorangehenden Ansprüche,
**dadurch gekennzeichnet, dass**
der elektrische Verbinder (1) in Längsrichtung (X) zwischen seinen beiden Gruppen an Anschlusseinrichtungen 8101, 102) eine Einspeiseeinrichtung zum Speisen der Anschlusseinrichtungen (110) mit einer externen elektrischen Energiequelle aufweist.

9. System nach Anspruch 8,
**dadurch gekennzeichnet, dass**
die Einspeiseeinrichtung eine Gruppe an Speisekontakten (120) aufweist, die abgewinkelt zu der Längsrichtung (X) zu den Verbindungseinrichtungen (110) angeordnet sind.

10. System nach einem der vorangehenden Ansprüche,
**dadurch gekennzeichnet, dass**
die Kanäle der Stromleitschienen (21, 22) jeweils durch einen Kanalboden und zwei sich entlang der Vertikalrichtung (Z) von dem Kanalboden weg erstreckende Kanalwände (215, 225) begrenzt sind, wobei insbesondere an zumindest einem der Längsenden der Stromleitschienen (21, 22) die zwischen zwei benachbarten Kanälen liegenden Kanalwände (215, 225) eine sich ausgehend von dem Längsende über einen Längserstreckungsabschnitt erstreckende Aussparung (213) aufweisen.

11. System nach Anspruch 10,
**dadurch gekennzeichnet, dass**
der elektrische Verbinder (1) zwischen je zwei in Transversalrichtung (Y) benachbarten Anschlusseinrichtungen einer jeden Gruppe an Anschlusseinrichtungen (101, 102) eine Trennwand (130) aufweist, wobei in der Betriebsposition jede der Trennwände (130) in jeweils einer der Aussparungen (213) angeordnet ist.

12. System nach einem der vorangehenden Ansprüche,
**dadurch gekennzeichnet, dass**
der elektrische Verbinder 81) an einer Seite entlang der Vertikalrichtung (Z) eine Schutzplatte (140) aufweist, wobei in der Betriebsposition die Schutzplatte (140) an der der Zugangsseite abgewandten Seite der Stromleitschienen (21, 22) angeordnet ist und sich in Längsrichtung (X) entlang eines Abschnitts der beiden Stromleitschienen (21, 22) erstreckt.

13. System nach einem der Ansprüche 8 bis 12,
**dadurch gekennzeichnet, dass**
das System ein Einspeiseelement (4) umfasst, das ein erstes Fixiermittel (46) aufweist und zu den Einspeisekontakten (40) der Einspeiseeinrichtung korrespondierende Speisekontakte (120) aufweist, wobei der elektrische Verbinder (1) ein zu dem ersten Fixiermittel (46) korrespondierendes zweites Fixiermittel (150) aufweist, wobei erstes und zweites Fixiermittel (46, 150) und Speise- und Einspeisekontakte (120, 40) dergestalt zueinander korrespondierend ausgebildet sind, dass das Einspeiseelement (4) über die zueinander korrespondierenden ersten und zweiten Fixiermittel (46, 160) mit dem elektrischen Verbinder (1) lösbar verbindbar ist unter elektrischer Kontaktierung der Speisekontakte (120) mit den Einspeisekontakten (40).

14. System nach Anspruch 13,
**dadurch gekennzeichnet, dass**
das System zumindest zwei unterschiedliche Einspeiseelemente (4) aufweist, die jeweils zu den Speisekontakten (120) korrespondierende Einspeisekontakte (40) aufweisen und jeweils zu dem zweiten Fixiermittel (150) korrespondierende erste Fixiermittel (46) aufweisen, wobei sich insbesondere die ersten Fixiermittel (46) der beiden unterschiedlichen Einspeiseelemente (4) unterscheiden, wobei insbesondere die unterschiedlichen Einspeiseelemente (4) externe Anschlusskontakte aufweisen, die mit ihren Einspeisekontakten (40) jeweils elektrisch leitend verbunden sind, wobei insbesondere die Einspeisekontakte (40) einer ersten der unterschiedlichen Einspeiseelemente (4) einen anderen Winkel zu dessen externen Anschlusskontakten aufweisen als die Speisekontakte (120) eines zweiten der unterschiedlichen Einspeiseelemente (4) zu dessen Anschlusskontakten.

15. System nach einem der vorangehenden Ansprüche,
**dadurch gekennzeichnet, dass**
zumindest eine der Tragschienen (7) eine Ausnehmung aufweist, in der der elektrische Verbinder (1) zumindest abschnittsweise angeordnet ist, wobei insbesondere zwei der Tragschienen (7) jeweils eine solche Ausnehmung aufweisen, dass sie mit ihren Längsenden aneinander angrenzend anordenbar sind unter Ausbildung einer Gesamtausnehmung mittels ihrer beiden Ausnehmungen, wobei der elektrische Verbinder (1) in dieser Gesamtausnehmung anordenbar ist.

16. System nach einem der vorangehenden Ansprüche,
**dadurch gekennzeichnet, dass**
die Stromleitschienen (21, 22) jeweils außerhalb ihrer Mitte entlang der Transversalrichtung (Y) eine Codiereinrichtung (216) aufweisen, wobei der elektrische Verbinder (1) eine korrespondierende Codiereinrichtung (116) aufweist und bei dem elektrischen Verbinden der Leitungsdrähte (31, 32) einer der Stromleitschienen (21, 22) mit den Anschlusseinrichtungen einer der Gruppen des elektrischen Verbinders (1) zwingend die zueinander korrespondierenden Codiereinrichtungen (116) miteinander in Eingriff zu bringen sind.

17. System nach einem der vorangehenden Ansprüche,
**dadurch gekennzeichnet, dass**
die Stromleitschiene (21, 22) in Längsrichtung (X) langgestreckt ist und in einer Transversalrichtung (Y) nebeneinander angeordnete und an einer entlang einer Vertikalrichtung (Z) ausgebildeten Zugangsseite offene Kanäle umfasst, die jeweils durch einen Kanalboden und zwei sich entlang der Vertikalrichtung (Z) von dem Kanalboden weg zur Zugangsseite hin erstreckende Kanalwände (215, 225) begrenzt sind, wobei an zumindest einem der Längsenden der Stromleitschiene (21, 22) die zwischen zwei benachbarten Kanälen liegenden Kanalwände (215, 225) eine sich ausgehend von dem Längsende über einen Längserstreckungsabschnitt erstreckende Aussparung (213) aufweisen.

18. System nach Anspruch 17,
**dadurch gekennzeichnet, dass**
die Kanäle senkrecht zur Längsrichtung (X) einen Querschnitt nach Art eines V aufweisen, der sich ausgehend vom Kanalboden zur Zugangsseite hin weitet, wobei insbesondere die Kanalwände (215, 225) eines jeden Kanals einen Hinterschnitt ausbilden und jeweils ein Leitungsdraht (31, 32) an dem Kanalboden eines jeden Kanals dergestalt anordenbar ist, dass er durch den Hinterschnitt an einem Austreten aus der Zugangsseite gehindert ist.

19. Verfahren zur Realisierung einer Leuchtenanordnung mittels eines Systems nach einem der Ansprüche 1 bis 18, wobei zwei in Längsrichtung (X) langgestreckte Leuchtenelemente, die jeweils eine in Längsrichtung (X) langgestreckte Tragschiene (7) aufweisen, an der jeweils eine in Längsrichtung (X) langgestreckte Stromleitschiene (21, 22) fixiert ist, die jeweils eine Mehrzahl an entlang der Längsrichtung (X) verlaufenden, entlang einer Transversalrichtung (Y) nebeneinander angeordneten und an einer entlang einer Vertikalrichtung (Z) ausgebildeten Zugangsseite offenen Kanäle aufweist, wobei in den Kanälen Leitungsdrähte (31, 32) angeordnet sind, miteinander verbunden werden, indem ein elektrischer Verbinder (1) zwischen den Leuchtenelementen angeordnet wird, der eine erste und eine zweite Gruppe an Anschlusseinrichtungen (101, 102) umfasst, wobei die erste Gruppe an Anschlusseinrichtungen (101) von der zweiten Gruppe an Anschlusseinrichtungen (102) in Längsrichtung (X) beabstandet ist und wobei jede Anschlusseinrichtung der ersten Gruppe (101) mit genau einer Anschlusseinrichtung der zweiten Gruppe (102) über jeweils eine Verbindungseinrichtung (110) elektrisch leitend verbunden ist, wobei die Leitungsdrähte (31, 32) eines ersten der beiden Leuchtenelemente an jeweils einer der ersten Gruppe an Anschlusseinrichtungen (101) angeschlossen werden und die Leitungsdrähte (31, 32) eines zweiten der Leuchtenelemente an jeweils einer der zweiten Gruppe an Anschlusseinrichtungen (102) angeschlossen werden, wobei ein Montagekörper, an dessen einer Seite, bezogen auf die Vertikalrichtung (Z), eine Kontakteinrichtung angeordnet ist, mit einer Bewegung entlang der Vertikalrichtung (Z) auf die Tragschiene (7) von einem der Leuchtenelemente zu bewegt wird und während dieser Bewegung die Kontakteinrichtung in elektrischen Kontakt mit den Leitungsdrähten (31, 32) der Stromleitschiene (21, 22) des Leuchtenelements gebracht wird, während sich die Kontakteinrichtung in einer beliebigen Längsposition innerhalb der Längserstreckung der Tragschiene (7) entlang der Stromleitschiene (21, 22) befindet, wobei die Leitungsdrähte (32) des zweiten Leuchtenelements an die zweite Gruppe an Anschlusseinrichtungen (102) angeschlossen wird, indem das zweite Leuchtenelement, bei dem an zumindest einem Längsende die Leitungsdrähte (31, 32) in Längsrichtung (X) über die Kanäle der Stromleitschiene (21, 22) überstehen, mit diesem Längsende auf den elektrischen Verbinder (1) entlang der Längsrichtung (X) bis zu einer Betriebsposition zugeschoben wird, in der die Leitungsdrähte (31, 32) des zweiten Leuchtenelements in elektrischem Kontakt mit den jeweils zugeordneten der zweiten Gruppe an Anschlusseinrichtungen (102) stehen und die Stromleitschiene (21, 22) mit dem elektrischen Verbinder (1) entlang der Längsrichtung (X) überlappt.

## Claims

1. System for realizing a luminaire elongated in a longitudinal direction (X), the system comprising several support rails (7) elongated in the longitudinal direction (X), several current conducting rails (21, 22) elongated in the longitudinal direction (X) and several conducting wires (31, 32) extending in the longitudinal direction (X), wherein the support rails (7) each have a cross-section perpendicular to the longitudinal direction (X) that is open at a vertical end along a vertical direction and that is limited along a transverse direction by two support rail side walls that are connected with one another by a support rail base extending along the transverse direction and that extend vertically away from the rail support base, wherein the current conducting rails (21, 22) each have a multitude of ducts extending along the longitudinal direction (X), arranged side by side along a transverse direction (Y) and being open at an access side configured along the vertical direction (Z), wherein respectively one group of conducting wires (31, 32) is associated to each of the current conducting rails (21, 22), conducting wires of which each is arranged in respectively one of the ducts of the current conducting wires (21, 22), wherein in an operating position a first current conducting rail (21), in the ducts of which a first group of conducting wires (31) is arranged, is fixed to a first support rail (7) by forming a first lighting element, and a second current conducting rail (22) , in the ducts of which a second group of conducting wires (32) is arranged, is fixed to a second support rail (7) by forming a second lighting element, wherein the lighting elements in the operating position are arranged side by side in the longitudinal direction (X) and the support rails (7) are mechanically connected to one another, and the conducting wires (31, 32) of the first and of the second group are electroconductively connected to one another, wherein the system comprises at least one mounting body elongated in the longitudinal direction (X), on the one side of which a contact device is arranged relative to the vertical direction (Z), wherein the system comprises an electrical connector (1) elongated in the longitudinal direction (X) that comprises a first and a second group of connecting devices (101, 102), wherein the first group of connecting devices (101) is spaced from the second group of connecting devices (102) in the longitudinal direction (X) and wherein each connecting device of the first group (101) is electroconductively connected to exactly one connecting device of the second group (102) by respectively one coupling device (110), wherein in the operating position each of the first group of conducting wires (31) is connected to respectively one of the first group of connecting devices (101) and each of the second group of conducting wires (32) is connected to respectively one of the second group of connecting devices (102), wherein in the operating position the coupling devices (110) are guided in ducts formed by the electrical connector (1) and are accessible from the access side between the connecting devices connected by them,
**characterized in that**
the mounting body is movable with a movement along the vertical direction (Z) towards one of the support rails (7) on which one of the current conducting rails (21, 22) is fixed that is connected to the electrical connector (1) until it abuts at the open vertical end of the support rail (7) so that the mounting body forms together with the support rail (7) an inner space that is circumferentially enclosed by the support rail (7) and the mounting body perpendicularly to the longitudinal direction (X) and that can be fixed to the support rail (7) by a fixing means, wherein the contact device is configured so as to be brought into electrical contact with the conducting wires of the current conducting rail (21, 22) in any longitudinal position within the longitudinal extension of the support rail (7) along the current conducting rail (21, 22) during said movement.

2. System according to claim 1,
**characterized in that**
in the operating position respectively one of the ducts formed by the electrical connector (1) continuously connects one of the ducts of the first current conducting rail (21) to one of the ducts of the second current conducting rail (22).

3. System according to one of the preceding claims,
**characterized in that**
in the operating position ducts walls (215, 225) of the electrical connector (1) and duct walls (215, 225) of the current conducting rail (21, 22) mesh in a comb-like manner, wherein in particular the electrical connector (1) with its duct walls (215, 225) engages around said duct walls (215, 225) of the current conducting rail (21, 22).

4. System according to one of the preceding claims,
**characterized in that**
respectively one electrical connector (1) continuously contactable from the access side along the longitudinal direction (X) is formed in the operating position by respectively one of the conducting wires (31, 32) of the first group of conducting wires (31), by respectively one of the connecting devices of the first group (101) of connecting devices (110), respectively one of the coupling devices (110), respectively one of the connecting devices of the second group (102) of connecting devices and respectively one of the conducting wires (32) of the second group of conducting wires.

5. System according to one of the preceding claims,
**characterized in that**
at least a majority of the connecting devices is configured as open contacts in a longitudinal direction (X), in particular as fork contacts, wherein the electrical connector (1) is configured corresponding to the current conducting rails (21, 22) in such a manner that the conducting wires (31, 32) arranged in one of the current conducting rails (21, 22) can be electrically conductively connected to one of the groups of connecting devices (101, 102), the current conducting rail (21, 22) being moved towards the electrical connector (1) along the longitudinal direction (X) by introducing each of all its conducting wires (31, 32) into respectively one of the contacts formed by the group of connecting devices (101, 102).

6. System according to one of the preceding claims,
**characterized in that**
respectively one of the connecting devices of the first group of connecting devices (101), one of the connecting devices of the second group of connecting devices (102) and one of the coupling devices (110) are connected with one another by forming a current conducting unit that is continuous in the longitudinal direction (X), wherein the distinct current conducting units are placed side by side in the transverse direction (Y) and in the operating condition each current conducting unit is connected to one of the first group of conducting wires (31) and to one of the second group of conducting wires (32).

7. System according to claim 6,
**characterized in that**
the electrical connector (1) comprises a connector housing in which the current conducting units are accommodated positionally fixed and isolated from one another.

8. System according to one of the preceding claims,
**characterized in that**
the electrical connector (1) comprises a feeding device in the longitudinal direction (X) between its two groups of connecting devices (101, 102) for feeding the connecting devices (110) with an external electrical power source.

9. System according to claim 8,
**characterized in that**
the feeding device comprises a group of supply contacts (120) that are arranged angled to the longitudinal direction (X) to the coupling devices (110).

10. System according to one of the preceding claims,
**characterized in that**
the ducts of the current conducting rails (21, 22) are limited respectively by a duct base and two duct walls (215, 225) extending away from the duct base along the vertical direction (Z), wherein in particular at least at one of the longitudinal ends of the current conducting rails (21, 22) the duct walls (215, 225) situated between two adjacent ducts comprise a recess (213) extending over a longitudinal extent portion starting from the longitudinal end.

11. System according to claim 10,
**characterized in that**
the electrical connector (1) comprises a dividing wall (130) between every two connecting devices adjacent in the transverse direction (Y) of each group of connecting devices (101, 102), wherein in the operating position each of the dividing walls (130) is arranged in respectively one of the recesses (213).

12. System according to one of the preceding claims,
**characterized in that**
the electrical connector (1) comprises a protective plate (140) on one side along the vertical direction (Z), wherein in the operating position the protective plate (140) is arranged on the side of the current conducting rails (21, 22), that is facing away from the access side, and extends in the longitudinal direction (X) along a portion of the two current conducting rails (21, 22).

13. System according to one of the claims 8 to 12,
**characterized in that**
the system comprises a feeding element (4) that comprises a first fixing means (46) and supply contacts (120) corresponding to the feeding contacts (40) of the feeding device, wherein the electrical connector (1) comprises a second fixing means (46) corresponding to the first fixing means (46), wherein the first and the second fixing means (46, 150) and supply and feeding contacts (120, 40) are configured corresponding to one another in such a manner that the feeding element (4) can be removably connected to the electrical connector (1) by the first and second fixing means (46, 160) corresponding to one another by electrically bonding the supply contacts (120) to the feeding contacts (40).

14. System according to claim 13,
**characterized in that**
the system comprises at least two distinct feeding elements (4) that comprise feeding contacts (40) respectively corresponding to the supply contacts (120) and that comprise first fixing means (46) respectively corresponding to the second fixing means (150), wherein in particular the first fixing means (46) of the two distinct feeding means (4) differ, wherein in particular the distinct feeding elements (4) comprise external connecting contacts that are electrically conductively connected respectively to their feeding contacts (40), wherein in particular the feeding contacts (40) of a first feeding element of the distinct feeding elements (4) have a different angle to its external connecting contacts than the supply contacts (120) of a second feeding element of the distinct feeding elements (4) to its connecting contacts.

15. System according to one of the preceding claims,
**characterized in that**
at least one of the support rails (7) has a recess in which the electrical connector (1) is arranged at least in sections, wherein in particular two of the support rails (7) have respectively such a recess, that they can be arranged adjacent to one another with their longitudinal ends by forming a total recess by means of their two recesses, wherein the electrical connector (1) can be arranged in this total recess.

16. System according to one of the preceding claims,
**characterized in that**
the current conducting rails (21, 22) comprise a coding device (216) respectively outside their midst along the transverse direction (Y), wherein the electrical connector (1) comprises a corresponding coding device (116) and, when electrically connecting the conducting wires (31, 32) of one of the current conducting rails (21, 22) to the connecting devices of one of the groups of the electrical connector (1), the coding devices (116) corresponding to one another imperatively have to be brought into engagement with each other.

17. System according to one of the preceding claims,
**characterized in that**
the current conducting rail (21, 22) is elongated in the longitudinal direction (X) and comprises ducts, arranged side by side in a transverse direction (Y) and open on an access side formed along a vertical direction (Z), that are limited respectively by a duct base and two duct walls (215, 225) extending away from the duct base along the vertical direction (Z), wherein at least at one of the longitudinal ends of the current conducting rails (21, 22) the duct walls (215, 225) situated between two adjacent ducts comprise a recess (213) extending over a longitudinal extent portion starting from the longitudinal end.

18. System according to claim 17,
**characterized in that**
the ducts comprise, perpendicularly to the longitudinal direction (X), a cross-section in the form of a V that widens starting from the duct base towards the access side, wherein in particular the duct walls (215, 225) of each duct form an undercut and a conducting wire (31, 32) can be respectively arranged on the duct base of each duct in such a manner that, due to the undercut, it is prevented from escaping from the access side.

19. Method for realizing a lighting arrangement by means of a system according to one of the claims 1 to 18, wherein two lighting elements elongated in the longitudinal direction (X), that each comprise one support rail (7) elongated in the longitudinal direction (X) to which respectively one current conducting rail (21, 22) elongated in the longitudinal direction (X) is fixed that comprises respectively a multitude of ducts extending along the longitudinal direction (X), arranged side by side along a transverse direction (Y) and open on an access side configured along a vertical direction (Z), wherein conducting wires (31, 32) are arranged in the ducts, are connected to one another, wherein an electrical connector (1) is arranged between the lighting elements, connector that comprises a first and a second group of connecting devices (101, 102), wherein the first group of connecting devices (101) is spaced from the second group of connecting devices (102) in the longitudinal direction (X) and wherein each connecting device of the first group (101) is electrically connected to exactly one connecting device of the second group (102) by respectively one coupling device (110), wherein the conducting wires (31, 32) of a first of the two lighting elements are connected to respectively one connecting device of the first group of connecting devices (101) and the conducting wires (31, 32) of a second of the two lighting elements are connected to respectively one connecting device of the second group of connecting devices (102), wherein a mounting body, on one side thereof a contact device is arranged relative to the vertical direction (Z), is moved towards the support rail (7) with a movement along the vertical direction (Z) by one of the lighting elements and during this movement the contact device is brought into electrical contact with the conducting wires (31, 32) of the current conducting rail (21, 22) of the lighting element while the contact device is in any longitudinal position within the longitudinal extent of the support rail (7) along the current conducting rail (21, 22), wherein the conducting wires (32) of the second lighting element are connected to the second group of connecting devices (102), wherein the second lighting element, for which the conducting wires (31, 32) project at least at one longitudinal end in longitudinal direction (X) over the ducts of the current conducting rail (21, 22), is pushed with this longitudinal end to the electrical connector (1) along the longitudinal direction (X) up to an operating position in which the conducting wires (31, 32) of the second lighting element are in electrical contact with the respectively associated conducting wires of the second group of connecting devices (102) and the current conducting rail (21, 22) overlaps with the electrical connector (1) along the longitudinal direction (X).

## Revendications

1. Système pour réaliser un luminaire allongé dans une direction longitudinale (X), le système comprenant plusieurs rails de support (7) allongés dans la direction longitudinale (X), plusieurs barres conductrices (21, 22) allongées dans la direction longitudinale (X) et plusieurs fils conducteurs (31, 32) s'étendant dans le sens longitudinal (X), cependant que les rails de support (7) présentent respectivement une section transversale perpendiculaire à la direction longitudinale (X) qui est ouverte à une extrémité verticale le long d'une direction verticale et qui est délimitée par deux parois latérales de rail de support le long d'une direction transversale qui sont reliées l'une à l'autre par un fond de rail de support qui s'étend le long de la direction transversale et qui s'étendent en s'éloignant du fond de rail de support, cependant que les barres conductrices (21, 22) présentent chacune une multitude de canaux qui s'étendent le long de la direction longitudinale (X), qui sont juxtaposés le long d'une direction transversale (Y) et ouverts sur un côté d'accès configuré le long de la direction verticale (Z), cependant qu'un groupe de fils conducteurs (31, 32) est associé respectivement à chacune des barres conductrices (21, 22), fils conducteurs dont chacun est placé dans respectivement l'un des canaux des barres conductrices (21, 22), cependant que dans une position de fonctionnement une première barre conductrice (21), dans les canaux de laquelle un premier groupe de fils conducteurs (31) est placé, est fixée à un premier rail de support (7) en formant un premier élément d'éclairage et une seconde barre conductrice (22), dans les canaux de laquelle un second groupe de fils conducteurs (7) est placé, est fixée à un second rail de support (7) en formant un second élément d'éclairage, cependant que les éléments d'éclairage en position de fonctionnement sont juxtaposés dans la direction longitudinale (X) et les rails de support (7) sont fixés mécaniquement l'un à l'autre et les fils conducteurs (31, 32) du premier et du second groupe sont reliés de manière électroconductrice les uns aux autres, cependant que le système comprend au moins un corps de montage allongé dans la direction longitudinale (X), un dispositif de contact étant placé le long d'un de ses côtés par rapport à la direction verticale (Z), cependant que le système comprend un connecteur électrique (1), qui s'étend dans la direction longitudinale (X), qui comprend un premier et un second groupe de dispositifs de raccordement (101, 102), cependant que le premier groupe de dispositifs de raccordement (101) est espacé du second groupe de dispositifs de raccordement (102) et cependant que chaque dispositif de raccordement du premier groupe (101) est relié de manière électroconductrice à exactement un dispositif de raccordement du second groupe (102) par respectivement un dispositif de connexion (110), cependant qu'en position de fonctionnement chacun des fils conducteurs du premier groupe de fils conducteurs est raccordé à respectivement un dispositif de raccordement du premier groupe de dispositifs de raccordement (101) et chacun des fils conducteurs du second groupe de fils conducteurs (32) est raccordé à respectivement un dispositif de raccordement du second groupe de dispositifs de raccordement (102), cependant qu'en position de fonctionnement les dispositifs de connexion (110) sont guidés dans des canaux formés par le connecteur électrique (1) et sont accessibles entre les dispositifs de raccordement reliés par eux à partir du côté d'accès,
**caractérisé en ce que** le corps de montage peut être déplacé avec un mouvement le long de la direction verticale (Z) en direction d'un des rails de support (7) sur lequel l'une des barres conductrices (21, 22) est fixée qui est raccordée au connecteur électrique (1) jusqu'à ce qu'il soit appliqué à l'extrémité verticale ouverte du rail de support (7) si bien que le corps de montage forme conjointement avec le rail de support (7) un espace intérieur, qui est clos circonférentiellement par le rail de support (7) et le corps de montage perpendiculairement à la direction longitudinale (X), et qui peut être fixé au rail de support (7) par un moyen de fixation, cependant que le dispositif de contact est configuré pour être amené en contact électroconducteur avec les fils conducteurs de la barre conductrice (21, 22) dans n'importe quelle position longitudinale à l'intérieur de l'extension en longueur du rail de support (7) le long de la barre conductrice (21, 22) pendant ledit mouvement.

2. Système selon la revendication 1,
**caractérisé en ce qu'**en position de fonctionnement, respectivement l'un des canaux formés par le connecteur électrique (1) relie en continu l'un des canaux de la première barre conductrice (21) à l'un des canaux de la seconde barre conductrice (22).

3. Système selon l'une des revendications précédentes,
**caractérisé en ce qu'**en position de fonctionnement, des parois de canal (215, 225) du connecteur électrique (1) et des parois de canal (215, 225) de la barre conductrice (21, 22) s'engrènent à la manière d'un peigne, cependant qu'en particulier le connecteur électrique (1) enserre avec ses parois de canal (215, 225) lesdites parois de canal (215, 225) de la barre conductrice (21, 22).

4. Système selon l'une des revendications précédentes,
**caractérisé en ce que** respectivement un connecteur électrique (1) qui peut être mis en contact continu par le côté d'accès le long de la direction longitudinale (X) est formé par respectivement l'un des fils conducteurs (31, 32) du premier groupe de fils conducteurs (31), respectivement l'un des dispositifs de raccordement du premier groupe (101) de dispositifs de raccordement, respectivement l'un des dispositifs de connexion (110), respectivement l'un des dispositifs de raccordement du second groupe (102) de dispositifs de raccordement et respectivement l'un des fils conducteurs (32) du second groupe de fils conducteurs en position de fonctionnement.

5. Système selon l'une des revendications précédentes,
**caractérisé en ce**
**qu'**au moins une majorité des dispositifs de raccordement sont configurés comme des contacts ouverts dans une direction longitudinale (X), en particulier des contacts à fourche, cependant que le connecteur électrique (1) est configuré en correspondant aux barres conductrices (21, 22) de manière telle que les fils conducteurs (31, 32) placés dans l'une des barres conductrices (21, 22) peuvent être reliés de manière électroconductrice à l'un des groupes de dispositifs de raccordement (101, 102), la barre conductrice (21, 22) étant déplacée vers le connecteur électrique (1) le long de la direction longitudinale (X) en introduisant chacun de tous ses fils conducteurs (31, 32) dans respectivement l'un des contacts formés par le groupe de dispositifs de raccordement (101, 102).

6. Système selon l'une des revendications précédentes,
**caractérisé en ce**
**que** respectivement un dispositif de raccordement du premier groupe de dispositifs de raccordement (101), l'un des dispositifs de raccordement du second groupe de dispositifs de raccordement (102) et l'un des dispositifs de connexion (110) sont reliés l'un à l'autre en formant une unité conductrice de courant continue dans la direction longitudinale (X), cependant que les unités conductrices de courant distinctes sont juxtaposées dans la direction transversale (Y) et en état de fonctionnement chaque unité conductrice de courant est raccordée à l'un des fils conducteurs du premier groupe de fils conducteurs (31) et à l'un des fils conducteurs du second groupe de fils conducteurs (32).

7. Système selon la revendication 6,
**caractérisé en ce**
**que** le connecteur électrique (1) présente un boîtier de connecteur dans lequel les unités conductrices de courant sont logées en position fixe et isolées l'une par rapport à l'autre.

8. Système selon l'une des revendications précédentes,
**caractérisé en ce**
**que** le connecteur électrique (1) présente, dans la direction longitudinale entre ses deux groupes de dispositifs de raccordement (101, 102), un dispositif d'injection de courant pour alimenter les dispositifs de raccordement (110) avec une source d'énergie électrique externe.

9. Système selon la revendication 8,
**caractérisé en ce**
**que** le dispositif d'injection de courant présente un groupe de contacts d'alimentation (120) qui sont placés en formant un angle avec la direction longitudinale par rapport aux dispositifs de connexion (110).

10. Système selon l'une des revendications précédentes,
**caractérisé en ce**
**que** les canaux des barres conductrices (21, 22) sont délimités respectivement par un fond de canal et deux parois de canal (215, 225) qui s'étendent en s'éloignant du fond de canal le long de la direction verticale, cependant qu'en particulier à au moins l'une des extrémités longitudinales des barres conductrices (21, 22) les parois de canal (215, 225) situées entre deux canaux voisins présentent un évidement (213) qui s'étend sur une portion d'extension longitudinale en partant de l'extrémité longitudinale.

11. Système selon la revendication 10,
**caractérisé en ce**
**que** le connecteur électrique (1) présente une cloison de séparation (130) entre deux dispositifs de raccordement voisins dans la direction transversale (Y) de chaque groupe de dispositifs de raccordement ( 101, 102), cependant qu'en position de fonctionnement chacune des cloisons de séparation (130) est placée dans respectivement l'un des évidements (213).

12. Système selon l'une des revendications précédentes,
**caractérisé en ce**
**que** le connecteur électrique (1) présente une plaque de protection (140) sur un côté le long de la direction verticale (Z), cependant qu'en position de fonctionnement la plaque de protection (140) est placée sur le côté des barres conductrices (21, 22) qui est opposé au côté d'accès et s'étend dans la direction longitudinale (X) le long d'une section des deux barres conductrices (21, 22).

13. Système selon l'une des revendications 8 à 12,
**caractérisé en ce**
**que** le système comprend un élément d'injection de courant (4) qui présente un premier moyen de fixation (46) et des contacts d'alimentation (120) qui correspondent aux contacts d'injection de courant (40) du dispositif d'injection de courant, cependant que le connecteur électrique (1) présente un second moyen de fixation (150) qui correspond au premier moyen de fixation (46), cependant que le premier et le second moyen de fixation (46, 150) et des contacts d'alimentation et d'injection de courant (120, 40) sont configurés correspondant les uns aux autres de manière telle que l'élément d'injection de courant (4) peut être relié de manière amovible au connecteur électrique (1) par les premiers et seconds moyens de fixation (46, 160) correspondant les uns aux autres en mettant en contact électrique les contacts d'alimentation (120) avec les contacts d'injection de courant (40).

14. Système selon la revendication 13,
**caractérisé en ce**
**que** le système présente au moins deux éléments d'injection de courant distincts (4) qui présentent des contacts d'injection de courant (40) qui correspondent respectivement aux contacts d'alimentation (120) et des premiers moyens de fixation (46) qui correspondent respectivement au second moyen de fixation (150), cependant qu'en particulier les premiers moyens de fixation (46) des deux éléments d'injection de courant distincts (4) se distinguent, cependant qu'en particulier les éléments d'injection de courant distincts (4) présentent des contacts de raccordement externes qui sont reliés de manière électroconductrice respectivement à leurs contacts d'injection de courant (40), cependant qu'en particulier les contacts d'injection de courant (40) d'un premier élément d'injection de courant des éléments d'injection de courant distincts (4) présentent un autre angle avec ses contacts de raccordement externes que les contacts d'alimentation (120) d'un second élément d'injection de courant des éléments d'injection de courant distincts (4) avec ses contacts de raccordement.

15. Système selon l'une des revendications précédentes,
**caractérisé en ce**
**qu'**au moins l'un des rails de support (7) présente un évidement dans lequel le connecteur électrique (1) est placé au moins par sections, cependant qu'en particulier deux des rails de support (7) présentent chacun un tel évidement si bien qu'ils peuvent être placés adjacents l'un à l'autre avec leurs extrémités longitudinales en formant un évidement global au moyen de leurs deux évidements, cependant que le connecteur électrique (1) peut être placé dans cet évidement global.

16. Système selon l'une des revendications précédentes,
**caractérisé en ce**
**que** les barres conductrices (21, 22) présentent chacune un dispositif de codage (216) en dehors de leur milieu le long de la direction transversale (Y), cependant que le connecteur électrique (1) présente un dispositif de codage correspondant (116) et que, lors de la connexion électrique des fils conducteurs (31, 32) d'une des barres conductrices (21, 22) avec les dispositifs de raccordement d'un des groupes du connecteur électrique (1), les dispositifs de codage (116) qui correspondent l'un à l'autre doivent impérativement être mis en prise l'un avec l'autre.

17. Système selon l'une des revendications précédentes,
**caractérisé en ce**
**que** la barre conductrice (21, 22) est allongée dans la direction longitudinale (X) et comprend des canaux juxtaposés dans une direction transversale (Y) et ouverts sur un côté d'accès configuré le long d'une direction verticale (Z) qui sont délimités respectivement par un fond de canal et deux parois de canal (215, 225) qui s'étendent en s'éloignant du fond de canal le long de la direction verticale (Z), cependant qu'à au moins une des extrémités longitudinales de la barre conductrice (21, 22) les parois de canal (215, 225) situées entre deux canaux voisins présentent un évidement (213) qui s'étend sur une portion d'extension longitudinale en partant de l'extrémité longitudinale.

18. Système selon la revendication 17,
**caractérisé en ce**
**que** les canaux présentent, perpendiculairement à la direction longitudinale (X), une section transversale à la manière d'un V qui s'élargit vers le côté d'accès en partant du fond de canal, cependant qu'en particulier les parois de canal (215, 225) de chaque canal forment une contre-dépouille et que respectivement un fil conducteur (31, 32) peut être placé sur le fond de canal de chaque canal de telle manière qu'il est empêché par la contre-dépouille de sortir par le côté d'accès.

19. Procédé pour réaliser un ensemble d'éclairage au moyen d'un système selon l'une des revendications 1 à 18, cependant que deux éléments d'éclairage allongés dans la direction longitudinale (X) qui présentent chacun un rail de support (7) allongé dans la direction longitudinale (X) auquel respectivement une barre conductrice (21, 22), allongée dans la direction longitudinale (X), est fixée qui présente respectivement une multitude de canaux qui s'étendent le long de la direction longitudinale (X), juxtaposés le long d'une direction transversale (Y) et ouverts sur un côté d'accès configuré le long d'une direction verticale (Z), des fils conducteurs (31, 32) étant placés dans les canaux, sont reliés l'un à l'autre, cependant qu'un connecteur électrique (1) est placé entre les éléments d'éclairage, connecteur qui comprend un premier et un second groupe de dispositifs de raccordement (101, 102), cependant que le premier groupe de dispositifs de raccordement (101) est espacé du second groupe de dispositifs de raccordement (102) dans la direction longitudinale (X) et cependant que chaque dispositif de raccordement du premier groupe est relié de manière électroconductrice à exactement un dispositif de raccordement du second groupe (102) par respectivement un dispositif de connexion (110), cependant que les fils conducteurs (31, 32) d'un premier des deux éléments d'éclairage sont raccordés à respectivement l'un des dispositifs de raccordement du premier groupe de dispositifs de raccordement (101) et les fils conducteurs (31, 32) d'un second des éléments d'éclairage sont raccordés à respectivement l'un des dispositifs de raccordement du second groupe de dispositifs de raccordement (102), cependant qu'un corps de montage, sur un côté duquel un dispositif de contact est placé par rapport à la direction verticale (Z), est déplacé avec un mouvement le long de la direction verticale (Z) vers le rail de support (7) d'un des éléments d'éclairage et, pendant ce mouvement, le dispositif de contact est mis en contact électrique avec les fils conducteurs (31, 32) de la barre conductrice (21, 22) de l'élément d'éclairage tandis que le dispositif de contact se trouve dans une position longitudinale quelconque à l'intérieur de l'extension en longueur du rail de support (7) le long de la barre conductrice (21, 22), cependant que les fils conducteurs (32) du second élément d'éclairage sont raccordés au second groupe de dispositifs de raccordement (102), cependant que le second élément d'éclairage, pour lequel les fils conducteurs (31, 32) dépassent les canaux de la barre conductrice (21, 22) à au moins une extrémité longitudinale, est poussé avec cette extrémité longitudinale vers le connecteur électrique (1) le long de la direction longitudinale (X) jusqu'à une position de fonctionnement dans laquelle les fils conducteurs (31, 32) du second élément d'éclairage sont en contact électrique avec les dispositifs de raccordement respectivement associés du second groupe de dispositifs de raccordement et la barre conductrice (21, 22) chevauche le connecteur électrique (1) le long de la direction longitudinale (X).
